# EUROPEAN PATENT APPLICATION

(11) **EP 4 819 343 A1**
(43) Date of publication of application: **07.10.2026**
(21) Application number: 24899658.9
(22) Date of filing: 25.11.2024
(51) Int. Cl.: H01M 50/30

(54) **BATTERY CELL, BATTERY AND ELECTRICAL DEVICE**

(30) Priority: 08.12.2023 CN 202323354804 U
(71) Applicant: Contemporary Amperex Technology Co., Limited, Ningde, Fujian 352100 (CN)
(72) Inventor: LI, Xiao, Ningde, Fujian 352100 (CN); LUO, Chenxu, Ningde, Fujian 352100 (CN); XU, Xiaofu, Ningde, Fujian 352100 (CN); XING, Chengyou, Ningde, Fujian 352100 (CN); YE, Yonghuang, Ningde, Fujian 352100 (CN)
(74) Representative: Ziebig Hengelhaupt Intellectual Property Attorneys Patentanwaltskanzlei PartGmbB
(86) International application number: PCT/CN2024/134179
(87) International publication number: WO 2025/119017

(57) **Abstract**

This application discloses a battery cell (20), a battery (100), and an electric device. The battery cell (20) includes a housing and an exhaust assembly (90). The housing has a wall portion and an accommodating cavity (221). The exhaust assembly (90) is disposed on the wall portion, and the exhaust assembly (90) configured to discharge a gas inside the housing. The battery cell (20) further includes an electrolyte. The electrolyte is filled in the accommodating cavity (221). A conductivity of the electrolyte satisfies: 2 ms/cm ≤ conductivity ≤ 16 ms/cm. An exhaust rate of the exhaust assembly (90) satisfies: 0.6 mL/day ≤ exhaust rate ≤ 10.0 mL/day. Through the solution of this application, battery cells with electrolytes having different conductivities match with exhaust components with different exhaust rates, which can address the conflict between high conductivity requirements and high gas production amounts, and reduce the impact of external water vapor intrusion on the battery during an exhaust process.

## Description

### TECHNICAL FIELD

This application claims priority to Chinese Patent Application No. 202323354804.5 filed on December 08, 2023 and entitled "BATTERY CELL, BATTERY, AND ELECTRIC DEVICE", which is incorporated herein by reference in its entirety.

### TECHNICAL FIELD

This application relates to the field of new energy technology, and in particular to a battery cell, a battery, and an electric device.

### BACKGROUND

With the continuous intensification of global energy and environmental issues, new energy, as one of the fields of sustainable development, is developing rapidly. Batteries, as a new energy mode, are being applied more and more widely, and have high requirements for safety in use and service life. During charging and discharging of a battery, the generation of gas inside the battery causes the internal pressure of the battery to increase, which reduces the safety of the battery cell and shortens the service life of the battery cell. The above statements are only used to provide background technical information related to this application and do not necessarily constitute prior art.

### SUMMARY

The main technical problem solved by this application is to provide a battery cell, a battery, and an electric device, which can discharge a gas inside the battery cell to the outside of a housing in a timely manner, maintain an air pressure inside the battery cell within a normal level, improve the safety performance of the battery, and greatly prolong the battery life.

To solve the above problem, a technical solution adopted by this application is to provide a battery cell, where the battery cell includes a housing and an exhaust assembly; the housing has a wall portion and an accommodating cavity; and the exhaust assembly is disposed on the wall portion, and the exhaust assembly is configured to discharge a gas inside the housing. The provision of the exhaust assembly can discharge a gas inside the battery cell to the outside of the housing in a timely manner, maintain an air pressure inside the battery cell within a normal level, improve the safety performance of the battery, and greatly prolong the battery life.

Further, the battery cell further includes an electrolyte, where the electrolyte is filled in the accommodating cavity; a conductivity of the electrolyte satisfies: 2 ms/cm ≤ conductivity ≤ 16 ms/cm; and an exhaust rate of the exhaust assembly satisfies: 0.6 mL/day ≤ exhaust rate ≤ 10.0 mL/day. Battery cells with electrolytes having different conductivities match with exhaust assemblies with different exhaust rates, which can address the conflict between high conductivity requirements and high gas production amounts, and reduce the impact of external water vapor intrusion on the battery during an exhaust process.

In an embodiment, the conductivity of the electrolyte satisfies: 8 ms/cm ≤ conductivity ≤ 16 ms/cm, and the exhaust rate of the exhaust assembly satisfies: 3.3 mL/day ≤ exhaust rate ≤ 10.0 mL/day. The electrolyte having a high conductivity causes a large gas production amount of the battery cell and matches with the exhaust assembly with a high exhaust rate to discharge the gas in a timely manner.

In an embodiment, the conductivity of the electrolyte satisfies: 11 ms/cm ≤ conductivity ≤ 14 ms/cm, and the exhaust rate of the exhaust assembly satisfies: 4.5 mL/day ≤ exhaust rate ≤ 9.0 mL/day. This allows for a more precise matching between the exhaust rate and the electrolyte conductivity, thereby guaranteeing the safety performance and service life of the battery cell while improving the charging capacity and energy density of the battery cell.

In an embodiment, the conductivity of the electrolyte satisfies: 2 ms/cm ≤ conductivity ≤ 8 ms/cm, and the exhaust rate of the exhaust assembly satisfies: 0.6 mL/day ≤ exhaust rate ≤ 5.0 mL/day. The electrolyte having a low conductivity causes a small gas production amount of the battery cell and matches with an exhaust assembly with a low exhaust rate to discharge the gas inside the battery in a timely manner and reduce the probability of external impurities (air, moisture, dust, and the like) entering the battery cell.

In an embodiment, the conductivity of the electrolyte satisfies: 4 ms/cm ≤ conductivity ≤ 6 ms/cm, and the exhaust rate of the exhaust assembly satisfies: 1.3 mL/day ≤ second exhaust rate ≤ 3.9 mL/day. This allows a more precise matching between the exhaust rate and the electrolyte conductivity, thereby guaranteeing the safety performance and service life of the battery cell.

In an embodiment, the exhaust assembly includes a gas-permeable membrane assembly, the gas-permeable membrane assembly includes a gas-permeable membrane, and a gas permeation rate of the gas-permeable membrane is 3 mL/day to 10 mL/day. This can discharge the gas inside the battery cell in a timely manner and prevent external impurities (air, moisture, dust, and the like) from entering the battery cell.

In an embodiment, the gas-permeable membrane includes a first gas-permeable membrane, and a gas permeation rate of the first gas-permeable membrane is 3 mL/day to 4 mL/day. This allows for a matching with a battery cell corresponding to an electrolyte with a relatively low conductivity.

In an embodiment, the gas-permeable membrane includes a second gas-permeable membrane, and a gas permeation rate of the second gas-permeable membrane is 9 mL/day to 10 mL/day. This allows for a matching with a battery cell corresponding to an electrolyte with a relatively high conductivity.

In an embodiment, the exhaust assembly includes a one-way valve, and an opening pressure of the one-way valve is greater than or equal to 0.2 MPa, optionally greater than or equal to 0.4 MPa, and optionally greater than or equal to 0.8 MPa. This allows for adaptation to different application scenarios and different exhaust requirements by regulating the valve opening pressure.

In an embodiment, the exhaust assembly includes a gas-permeable membrane assembly and a one-way valve; the wall portion has a first exhaust hole; the first exhaust hole enables communication between the inside of the housing and the outside of the housing; and the battery cell is configured such that a gas discharged through the first exhaust hole flows through the one-way valve and the gas-permeable membrane assembly. In this case, the gas-permeable membrane assembly and the one-way valve are connected in series. The one-way valve can protect the airtightness of a battery cell system and reduce the probability of external water vapor entering the battery cell system. In addition, the gas-permeable membrane can block the overflow of the electrolyte and seal the battery system when the one-way valve is opened.

In an embodiment, the opening pressure of the one-way valve is greater than or equal to 0.4 MPa; the gas-permeable membrane assembly includes a second gas-permeable membrane; and a gas permeation rate of the second gas-permeable membrane is 9 mL/day to 10 mL/day. In a case of serial connection, through cooperation of a gas-permeable membrane with a high gas permeation rate, rapid exhaust can be achieved when the one-way valve is opened.

In an embodiment, the exhaust assembly includes a gas-permeable membrane assembly and a one-way valve; the wall portion has a first exhaust hole and a third exhaust hole spaced apart; the first exhaust hole and the third exhaust hole each enable communication between the inside of the housing and the outside of the housing; and the battery cell is configured such that a gas discharged through the first exhaust hole flows through the one-way valve, and a gas discharged through the third exhaust hole flows through the gas-permeable membrane assembly. In this case, the gas-permeable membrane assembly and the one-way valve are connected in parallel and can both exhaust gas simultaneously, thereby achieving a relatively high exhaust rate.

In an embodiment, the opening pressure of the one-way valve is greater than or equal to 0.8 MPa; the gas-permeable membrane assembly includes a first gas-permeable membrane; and a gas permeation rate of the first gas-permeable membrane is 3 mL/day to 4 mL/day. In a case of parallel connection, through cooperation of a gas-permeable membrane with a low gas permeation rate, the risk of external water vapor entering the battery cell through the gas-permeable membrane when the gas-permeable membrane has a high gas permeability can be reduced.

In an embodiment, a gas production rate of the battery cell satisfies: 0.006 mL/Ah/D ≤ gas production rate ≤ 0.066 mL/Ah/D. An appropriate exhaust assembly can be matched according to the gas production rate of the battery.

Optionally, the gas production rate of the battery cell satisfies: 0.006 mL/Ah/D ≤ gas production rate ≤ 0.033 mL/Ah/D. An appropriate exhaust assembly can be matched according to the gas production rate of the battery.

Further, the gas production rate of the battery cell satisfies: 0.013 mL/Ah/D ≤ gas production rate ≤ 0.026 mL/Ah/D. An appropriate exhaust assembly can be matched according to the gas production rate of the battery.

Optionally, the gas production rate of the battery cell satisfies: 0.033 mL/Ah/D ≤ gas production rate ≤ 0.066 mL/Ah/D. An appropriate exhaust assembly can be matched according to the gas production rate of the battery.

Further, the gas production rate of the battery cell satisfies: 0.045 mL/Ah/D ≤ gas production rate ≤ 0.060 mL/Ah/D. An appropriate exhaust assembly can be matched according to the gas production rate of the battery.

In an embodiment, the electrolyte includes one or more of chain ethers, ethylene glycol dimethyl ether and derivatives thereof, diethylene glycol dimethyl ether, triethylene glycol dimethyl ether, tetraethylene glycol dimethyl ether, and cyclic ethers. The risk of gas production caused by the electrolyte can be reduced.

In an embodiment, the battery cell further includes an electrode assembly, where the electrode assembly is accommodated in the accommodating cavity, and the electrode assembly includes a positive electrode plate and a negative electrode plate, where the positive electrode plate includes a positive electrode current collector and a positive electrode active layer disposed on the positive electrode current collector, the positive electrode active layer includes a positive electrode active material, and the positive electrode active material includes one or more of a polyanionic positive electrode material, a phosphate positive electrode material, a sulfate positive electrode material, a silicate positive electrode material, and a borate positive electrode material; and/or the negative electrode plate includes a negative electrode current collector and a carbon-containing coating provided on the negative electrode current collector, the carbon-containing coating includes a carbon-containing material, and the carbon-containing material includes one or more of conductive carbon, graphite, hard carbon, and carbon nanotubes. The risk of gas production caused by the electrode material can be reduced.

In an embodiment, the one-way valve includes a valve body and a valve core; the valve body has a valve cavity inside, and the valve body is provided with an air inlet and an air outlet; the air inlet is configured to enable communication between the valve cavity and the inside of the housing; the air outlet is configured to enable communication between the valve cavity and the outside of the housing; and the valve core is disposed in the valve cavity, the valve core is configured to block an air inlet channel of the valve cavity, and the valve core is configured to open the air inlet channel under the action of the gas inside the housing. In this way, the discharge of the gas is facilitated.

In an embodiment, the gas-permeable membrane assembly includes a gas-permeable membrane and a connecting member; the connecting member is provided with a first gas-permeable hole; and the gas-permeable membrane is disposed on the connecting member and covers the first gas-permeable hole, and the gas-permeable membrane is configured to allow the gas inside the battery cell to pass through the gas-permeable membrane and be discharged. Thus, the connection strength of the gas-permeable membrane assembly can be improved, and the risk of deformation of the gas-permeable membrane can be reduced.

In an embodiment, the wall portion has an outer surface and an inner surface disposed back to back; the outer surface faces the outside of the housing; the inner surface faces the inside of the housing; the wall portion is provided with a first exhaust hole; the first exhaust hole includes a through-hole section and a first hole section; the through-hole section and the first hole section are arranged along a thickness direction of the wall portion; the through-hole section enables communication between the inside of the housing and the outside of the housing; the first hole section is located on a side of the through-hole section facing away from the inside of the housing; an aperture of the first hole section is larger than an aperture of the through-hole section; and the one-way valve is at least partially accommodated in the first hole section. This facilitates the assembly of the one-way valve.

In an embodiment, the valve body of the one-way valve at least partially protrudes from the outer surface; the wall portion has a first counterbore recessed relative to the inner surface; the first counterbore is disposed around the first exhaust hole; and the gas-permeable membrane assembly is at least partially accommodated in the first counterbore. Thus, the installation height of the exhaust assembly can be reduced.

In an embodiment, the valve body of the one-way valve at least partially protrudes from the outer surface of the wall portion; the first exhaust hole further includes a second hole section; along the thickness direction of the wall portion, the second hole section is located between the through-hole section and the first hole section; an aperture of the second hole section is smaller than the aperture of the first hole section, and the aperture of the second hole section is larger than the aperture of the through-hole section; and the gas-permeable membrane assembly is at least partially accommodated in the second hole section, and the gas-permeable membrane assembly is located on a side of the one-way valve facing the wall portion. This facilitates the assembly of the exhaust assembly.

In an embodiment, the one-way valve includes a valve body; the valve body at least partially protrudes from the inner surface of the wall portion, and the valve body includes a valve seat and a valve cover; the valve seat includes a seat bottom wall and a seat side wall connected to the seat bottom wall; the valve cover is disposed at an end of the valve seat away from the seat bottom wall; the valve cover, the seat side wall, and the seat bottom wall enclose the valve cavity; and the valve seat is provided with an air inlet of the valve cavity; where the gas-permeable membrane assembly is disposed on a side of the seat bottom wall away from the valve cavity; or the gas-permeable membrane assembly is disposed on a side of the seat bottom wall facing the valve cavity. Thus, the installation height of the exhaust assembly can be reduced.

To solve the above technical problem, another technical solution adopted by this application is to provide a battery, where the battery includes the above battery cell, and the battery has at least the same advantages as the battery cell.

To solve the above technical problem, another technical solution adopted by this application is to provide an electric device including the above battery, where the electric device has at least the same advantages as the battery.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments or exemplary technologies. Apparently, the accompanying drawings in the following description show merely some embodiments of this application, and those of ordinary skill in the art may still derive other drawings from these accompanying drawings without creative efforts.
FIG. 1 is a schematic structural exploded view of a battery cell according to one or more embodiments;
FIG. 2 is a schematic structural exploded view of a battery cell according to one or more embodiments;
FIG. 3 is a schematic cross-sectional structural diagram of a one-way valve according to one or more embodiments;
FIG. 4 is a schematic partial structural exploded view of a battery cell according to one or more embodiments;
FIG. 5 is a schematic front view of a one-way valve according to one or more embodiments;
FIG. 6 is a schematic structural exploded view of a one-way valve according to one or more embodiments;
FIG. 7 is a schematic cross-sectional structural diagram of a one-way valve according to one or more embodiments;
FIG. 8 is a schematic front view of a one-way valve according to one or more embodiments;
FIG. 9 is a schematic structural exploded view of a one-way valve according to one or more embodiments;
FIG. 10 is a schematic partial cross-sectional structural diagram of a battery cell according to one or more embodiments;
FIG. 11 is a schematic cross-sectional structural diagram of a gas-permeable membrane assembly according to one or more embodiments;
FIG. 12 is a schematic partial cross-sectional structural diagram of an end cover according to one or more embodiments;
FIG. 13 is a schematic partial cross-sectional structural diagram of a battery cell according to one or more embodiments;
FIG. 14 is a partial front view of a battery cell according to one or more embodiments;
FIG. 15 is a schematic partial cross-sectional structural diagram of an end cover according to one or more embodiments;
FIG. 16 is a schematic partial cross-sectional structural diagram of a battery cell according to one or more embodiments;
FIG. 17 is a partial front view of a battery cell according to one or more embodiments;
FIG. 18 is a schematic structural exploded view of an exhaust assembly according to one or more embodiments;
FIG. 19 is a schematic cross-sectional structural diagram of an exhaust assembly according to one or more embodiments
FIG. 20 is a schematic structural exploded view of an exhaust assembly according to one or more embodiments;
FIG. 21 is a schematic cross-sectional structural diagram of an exhaust assembly according to one or more embodiments;
FIG. 22 is a schematic structural exploded view of an exhaust assembly according to one or more embodiments;
FIG. 23 is a schematic cross-sectional structural diagram of an exhaust assembly according to one or more embodiments.
FIG. 24 is a schematic structural exploded view of a battery according to one or more embodiments; and
FIG. 25 is a schematic structural diagram of a vehicle according to one or more embodiments.

In the drawings:
1000. vehicle; 300. motor; 200. controller; 100. battery; 10. box; 11. first portion; 12. second portion; 20. battery cell; 21. end cover; 21a. outer surface; 21b. inner surface; 291. first exhaust hole; 22. housing body; 221. accommodating cavity; 23. electrode assembly; 24. insulating member; 293. third exhaust hole; 25. electrode terminal; 90. exhaust assembly; 30. one-way valve; 31. valve body; 311. valve seat; 3111. first through hole; 3112. first recess; 3113. protrusion; 3114. fourth through hole; 3115. seat bottom wall; 3116. seat side wall; 312. valve cover; 312a. protruding portion; 3121. cover top wall; 3122. cover side wall; 31221. second through hole; 3123. fifth through hole; 313. valve cavity; 313a. air inlet; 313b. air outlet; 313c. first exhaust gap; 32. valve core; 321. blocking member; 3211. sealing portion; 3212. pressing portion; 322. elastic member; 40. gas-permeable membrane assembly; 41. gas-permeable membrane; 42. metal member; 491. first gas-permeable hole; 43. backing member; 70. pressure relief mechanism; T1. first annular step surface; T2. second annular step surface; T3. transition surface; and S1. first counterbore.

### DESCRIPTION OF EMBODIMENTS

To make the objectives, technical solutions, and advantages of the embodiments of this application clearer, the following describes embodiments of this application in detail with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", "have", and any other variations thereof in the specification, claims and brief description of drawings of this application are intended to cover non-exclusive inclusions.

In the description of the embodiments of this application, the technical terms "first", "second", and the like are merely for the purpose of description, and shall not be understood as any indication or implication of relative importance or any implicit indication of the number of technical features indicated. In the description of the embodiments of this application, the term "a plurality of" means more than two (inclusive). Similarly, "a plurality of groups" means more than two (inclusive) groups, and "a plurality of pieces" means more than two (inclusive) pieces, unless otherwise clearly and specifically limited.

Reference to "embodiment" in the specification means that specific features, structures, or characteristics described with reference to an embodiment may be included in at least one embodiment of this application. The word "embodiment" appearing in various places in this specification does not necessarily refer to the same embodiment or an independent or alternative embodiment that is exclusive of other embodiments. It is explicitly or implicitly understood by those skilled in the art that the embodiments described herein may be combined with other embodiments.

In the description of the embodiments of this application, the term "and/or" in this specification is only an associative relationship for describing associated objects, indicating that three relationships may be present. For example, A and/or B may indicate three cases: presence of only A; presence of both A and B; and presence of only B. In addition, the character "/" in this specification generally indicates an "or" relationship between the contextually associated objects.

Quantities, ratios, and other values are presented herein in a range format. It should be understood that such format of range is used for convenience and simplicity and should be flexibly understood as including not only values explicitly designated as falling within the range but also all individual values or sub-ranges covered by the range as if each value and sub-range are explicitly designated.

In the description of the embodiments of this application, the same reference signs denote the same components, and for brevity, detailed descriptions of the same components are omitted in different embodiments. It should be understood that as shown in the accompanying drawings, sizes such as thickness, length, and width of various components and sizes such as overall thickness, length, and width of integrated apparatuses in the embodiments of this application are merely for illustrative purposes and should not constitute any limitations on this application.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on the embodiments of this application.

In the description of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. For those of ordinary skill in the art, the specific meanings of the above terms in the embodiments of this application can be understood according to specific circumstances.

Batteries are widely used in the field of new energy, mainly including electric vehicles, energy storage systems and renewable energy. In the field of electric vehicles, higher performance such as longer driving range and fast charging has been gradually achieved. In terms of energy storage systems, batteries are widely used in large-scale and distributed energy storage. The batteries can balance grid loads, store renewable energy such as solar energy and wind energy, and release stored energy during peak periods. In addition, small rechargeable batteries are also widely used in wearable devices, drones and smart homes.

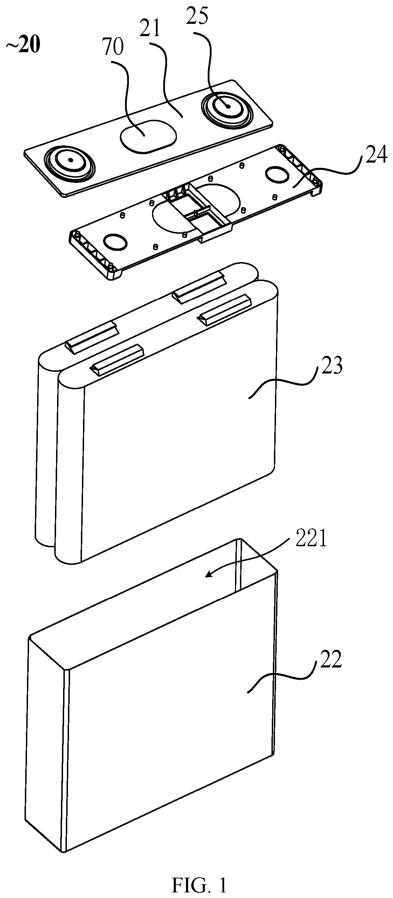

Referring to FIG. 1, FIG. 1 is a schematic structural exploded view of a battery cell according to one or more embodiments. A battery cell is provided. The battery cell 20 is the smallest unit constituting a battery. As shown in FIG. 1, the battery cell 20 includes an end cover 21, a housing body 22, an electrode assembly 23, and other functional components.

The end cover 21 refers to a component that covers an opening of the housing body 22 to isolate the internal environment of the battery cell 20 from the external environment. Without limitation, the shape of the end cover 21 can be adapted to the shape of the housing body 22 to fit the housing body 22. Optionally, the end cover 21 may be made of a material with certain hardness and strength (such as aluminum alloy). In this way, the end cover 21 is not prone to deformation when subjected to extrusion and collision, so that the battery cell 20 may have higher structural strength and improved the safety performance. Functional components such as an electrode terminal 25 may be disposed on the end cover 21. The electrode terminals 25 may be configured to be electrically connected to the electrode assembly 23 for outputting or inputting the electrical energy of the battery cell 20. Exemplarily, the battery cell 20 is provided with two electrode terminals 25, and the two electrode terminals 25 are both installed on the end cover 21. The two electrode terminals 25 are respectively configured to be electrically connected to two tabs of the electrode assembly 23 with opposite polarities for outputting or inputting a positive electrode and a negative electrode of the battery cell 20 respectively. In some embodiments, the end cover 21 may be further provided with a pressure relief mechanism 70 for relieving internal pressure when the internal pressure or temperature of the battery cell 20 reaches a threshold. The end cover 21 may alternatively be made of various materials, such as copper, iron, aluminum, stainless steel, aluminum alloy, and plastic. This is not particularly limited in the embodiments of this application. In some embodiments, an insulating member 24 may be further disposed on an inner side of the end cover 21. The insulating member 24 may be configured to isolate an electrical connection component in the housing body 22 from the end cover 21 so as to reduce the risk of short circuit. Exemplarily, the insulating member may be plastic, rubber, or the like.

The housing body 22 is a component configured to cooperate with the end cover 21 to form an accommodating cavity 221 of the battery cell 20, where a formed internal space may be used for accommodating the electrode assembly 23, an electrolyte, and other components. The housing body 22 and the end cover 21 may be independent components. An opening may be provided on the housing body 22. The end cover 21 covers the opening to form the internal environment of the battery cell 20. Without limitation, the end cover 21 and the housing body 22 may alternatively be integrated. Specifically, the end cover 21 and the housing body 22 may first form a shared connection surface before other components are placed into the housing. When the inside of the housing body 22 needs to be encapsulated, the end cover 21 is configured to cover the housing body 22. The housing body 22 may have various shapes and various sizes, such as a cuboid, a cylinder, and a hexagonal prism. Specifically, the shape of the housing body 22 can be determined according to the specific shape and size of the electrode assembly 23. The housing body 22 may be made of various materials, such as copper, iron, aluminum, stainless steel, aluminum alloy, and plastic. This is not particularly limited in the embodiments of this application.

The electrode assembly 23 is a component in the battery cell 20 where electrochemical reactions occur. The housing body 22 may include one or more electrode assemblies 23. The electrode assembly 23 is mainly formed by winding or stacking a positive electrode plate and a negative electrode plate, and a separator is typically disposed between the positive electrode plate and the negative electrode plate. Portions of the positive electrode plate and the negative electrode plate that have active materials constitute a body portion of the electrode assembly, and portions of the positive electrode plate and the negative electrode plate that do not have active materials each constitute a tab. A positive electrode tab and a negative electrode tab may be located together at one end of the body portion or at two ends of the body portion respectively. During charging and discharging of a battery, a positive electrode active material and a negative electrode active material react with an electrolyte, and tabs are connected to electrode terminals to form a current loop.

In an embodiment, the positive electrode plate includes a positive electrode current collector and a positive electrode active layer disposed on at least one side of the positive electrode current collector, and the positive electrode active layer includes a positive electrode active material.

As an example, the positive electrode current collector has two opposite surfaces opposite in its thickness direction, and the positive electrode active layer may be disposed on either or both of the two opposite surfaces of the positive electrode current collector.

In an embodiment, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), or polyethylene (PE)).

In an embodiment, the positive electrode material includes one or more of a polyanionic positive electrode material, a phosphate positive electrode material, a sulfate positive electrode material, a silicate positive electrode material, and a borate positive electrode material. For example, in a positive electrode active material of a sodium battery, a polyanionic compound includes compounds based on a phosphoric acid and a fluorophosphoric acid. Compounds based on the phosphoric acid include Naₓ₁Fe_{y1}Pₘ₁Oₙ₁, for example, sodium iron phosphate with a high capacity and sodium iron pyrophosphate with a high voltage platform. The polyanionic compound include one or more of sodium vanadium trifluorophosphate Na₃V₂(PO₄)₂F₃, sodium vanadium fluorophosphate NaVPO₄F, sodium vanadium phosphate Na₃V₂(PO₄)₃, Na₄Fe₃(PO₄)₂P₂O₇, NaFePO₄, and Na₃V₂(PO₄)₃. A Prussian blue compound is NaₓMM(CN)₆, where M and M are one or more of Fe, Mn, Co, Ni, Cu, Zn, Cr, Ti, V, Zr, and Ce; and 0 < x ≤ 2. A positive electrode active material in a lithium metal battery may include at least one of lithium nickel cobalt manganese oxide, lithium nickel cobalt aluminum oxide, lithium iron phosphate, lithium cobalt oxide, lithium manganese oxide, and lithium manganese iron phosphate.

In an embodiment, the negative electrode plate includes a negative electrode current collector and a negative electrode active layer disposed on at least one surface of the negative electrode current collector, and the negative electrode active layer includes a negative electrode active material. In this embodiment, the battery cell is an ion battery. During charging and discharging of the battery, active ions (such as Li⁺ and Na⁺) are intercalated or deintercalated in the negative electrode active material.

As an example, the negative electrode current collector has two opposite surfaces in its thickness direction, and the negative electrode active layer may be disposed on either or both of the two opposite surfaces of the negative electrode current collector.

In an embodiment, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector can be obtained by forming a metal material (copper, copper alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), or polyethylene (PE)).

In an embodiment, the negative electrode active material may include one or more of a silicon-based material, a silicon-carbon material, a carbon material, and a selenium-based material. Specifically, the negative electrode active material includes one or more of artificial graphite, natural graphite, hard carbon, soft carbon, a silicon-based material, and a selenium-based materials. The silicon-based material may be selected from one or more of elemental silicon, a silicon-oxygen compound (such as silicon monoxide), a silicon-carbon composite, a silicon-nitrogen composite, and silicon alloy. The selenium-based material may be selected from one or more of elemental selenium, a selenium-oxygen compound, and selenium alloy.

In an embodiment, the negative electrode plate includes a negative electrode current collector and a carbon-containing coating provided on at least one surface of the negative electrode current collector. In this embodiment, the battery cell is a metal battery. During charging and discharging of the battery, active ions are deposited or stripped at the negative electrode plate. The metal battery may be one of alkali metal batteries, such as lithium metal batteries, sodium metal batteries, potassium metal batteries, zinc metal batteries, and aluminum metal batteries. The battery of this type may also be called an "anode-free battery". During charging, active ions (such as Na⁺) deintercalated from the positive electrode active material are deposited on the negative electrode current collector to form sodium metal. The provision of the carbon-containing coating helps to make the metal deposition more uniform. The carbon-containing material includes one or more of conductive carbon, graphite, hard carbon, and carbon nanotubes.

In some other embodiments, a conductive film layer may also be deposited on the negative electrode current collector. For example, the conductive film layer includes an alloy material, a titanium-based material, an active metal (such as sodium metal), a carbon-based material deposited with metal, a composite material containing metal, an alloy material containing metal, and the like. The above alloy material includes but is not limited to sodium-tin alloy, sodium-germanium alloy, and sodiumantimony alloy. The titanium-based material includes but is not limited to titanium dioxide, titanate, and titanium phosphate.

In an embodiment, the positive electrode active layer and the negative electrode active layer may each further include a binder and a conductive agent. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. As an example, the conductive agent may include at least one of superconducting carbon, acetylene black, carbon black, Ketjen black, carbon dots, carbon nanotubes, graphene, and carbon nanofiber.

In an embodiment, the separator may be any known porous separator with good chemical stability and mechanical stability.

In an embodiment, a material of the separator may be selected from at least one of glass fiber, non-woven fabric, polyethylene, polypropylene, and polyvinylidene fluoride. The separator may be a single-layer film or a multi-layer composite film, which is not particularly limited. When the separator is a multi-layer composite film, materials of layers may be the same or different, which is not particularly limited.

The electrolyte functions to conduct ions between the positive electrode plate and the negative electrode plate. The electrolyte may be in a liquid state, a gel state, or an all-solid-state.

In some embodiments, the electrolyte is a liquid electrolyte. The liquid electrolyte includes an electrolytic salt and a solvent. After the electrolytic salt is dissolved, electrolyte ions are formed, and electrical conduction is achieved by the migration of the electrolyte ions in the electrolytic salt.

In an embodiment, in a sodium battery, the electrolytic salt includes sodium salts such as sodium hexafluorophosphate (NaPF₆), sodium bis(fluorosulfonyl)imide (NaFSI), sodium trifluoromethanesulfonate (CF₃NaO₃S), and sodium sulfide (Na₂S). In a lithium battery, the electrolytic salt includes at least one lithium salt selected from lithium perchlorate, lithium hexafluoroarsenate, lithium hexafluorophosphate, lithium bis(trifluoromethanesulfonyl)imide, lithium bis(fluorosulfonyl)imide, lithium difluorooxalate borate, lithium tetrafluoroborate, and lithium trifluoromethanesulfonate.

In an embodiment, the solvent includes one or more solvents of chain ethers, ethylene glycol dimethyl ether and derivatives thereof, diethylene glycol dimethyl ether, triethylene glycol dimethyl ether, tetraethylene glycol dimethyl ether, and cyclic ethers. Specifically, the solvent includes dimethyl ether (DME), diethylene glycol diethyl ether, tetraethylene glycol dimethyl ether, 2,2,2,2-tetrafluoroethyl ether, ethylene glycol diethyl ether, triethylene glycol dimethyl ether, ethylene glycol dimethyl ether derivatives, methyl trifluoroethyl carbonate (FEMC), dioxolane (DOL), acetonitrile (AN), fluorobenzene, triethyl phosphate (TEP), sulfolane, 2-methyltetrahydrofuran, tetrahydrofuran, dimethyl sulfoxide, N,N-dimethylacetamide, and the like.

In an embodiment, the electrolytic solution may further include an additive. For example, the additive may include a negative electrode film-forming additive and a positive electrode film-forming additive, and may further include additives capable of improving certain performance of the battery, such as an additive for improving the overcharge performance of the battery, and an additive for improving high-temperature performance or low-temperature performance of the battery.

During charging and discharging of the battery, some side reactions produce gas. If the gas produced by the battery is not discharged in a timely manner, the internal pressure of the battery increases. An excessively high internal pressure causes adverse impact on the performance and appearance of the battery. For example, in severe cases, the excessively high internal pressure causes destructive impact on the performance and appearance of the battery, such as electrolyte leakage, bulging, increased battery internal resistance, and shortened discharge time and cycle life. In addition, there are some abnormal operations during the use of the battery, including overcharging, overdischarging, internal faults, and the like. In this case, the chemical reactions inside the battery may be out of control and accompanied by violent release of gas, and may even cause thermal runaway in the battery. The thermal runaway in the battery refers to a chain reaction phenomenon caused by various inducements. A large amount of heat and harmful gases emitted by thermal runaway cause fire and explosion in the battery.

It has been found through research that the electrolyte is one of the key factors affecting gas production behavior. On the one hand, the electrolyte contains some highly active organic substances, which are prone to oxidation reactions on a positive electrode side or reduction reactions on a negative electrode side to produce gas. On the other hand, the electrolyte functions to conduct ions between the positive electrode plate and the negative electrode plate. To achieve rapid migration of ions, the electrolyte typically needs to have a high ionic conductivity. However, a high ionic conductivity makes the electrolyte components more active and more likely to produce gas. Therefore, it is necessary to balance the relationship between battery gas production and ionic conductivity.

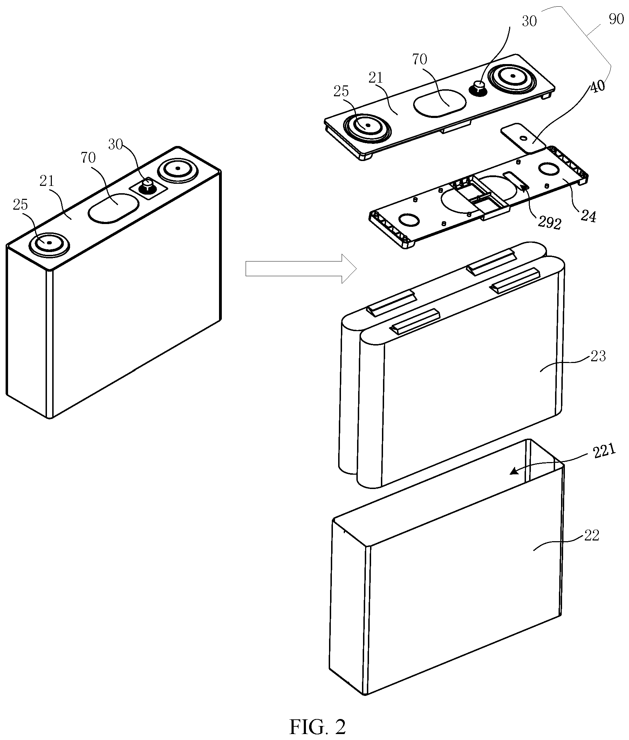

Referring to FIG. 2, FIG. 2 is a schematic structural exploded view of a battery cell according to one or more embodiments. According to some embodiments of this application, this application discloses a battery cell 20. The battery cell 20 includes a housing and an exhaust assembly 90. The housing has a wall portion and an accommodating cavity 221. The exhaust assembly 90 is disposed on the wall portion, and the exhaust assembly 90 is configured to discharge a gas inside the housing. The provision of the exhaust assembly 90 can discharge the gas inside the battery cell to the outside of the housing in a timely manner, maintain an air pressure inside the battery cell within a normal level, improve the safety performance of a battery, and greatly prolong the battery life.

In this embodiment, the battery cell 20 further includes an electrolyte, and the electrolyte is filled in the accommodating cavity 221. A conductivity of the electrolyte satisfies: 2 ms/cm ≤ conductivity ≤ 16 ms/cm. An exhaust rate of the exhaust assembly 90 satisfies: 0.6 mL/day ≤ exhaust rate ≤ 10.0 mL/day.

Conductivity is a numerically expressed capability of a solution in conducting current. The conductivity of an electrolyte depends on a concentration of migratable ions and a migration rate of the ions under a given electric field. High conductivity can achieve rapid migration of ions and improve the charging capacity and energy density of the entire battery cell, but high-conductivity electrolyte components are more prone to oxidation/reduction reactions during charging and discharging, making the gas production amount of the battery cell larger, leading to an increase in the internal pressure of the battery, and bringing a series of adverse consequences. If a low-conductivity electrolyte is used to balance gas production, the charging capacity and energy density will be compromised.

The conductivity of the electrolyte generally refers to the reciprocal of the resistance of one cubic centimeter of electrolyte at 25°C, expressed in Ω⁻¹·cm⁻¹ or S/cm.

The conductivity test principle is as follows: The conductivity of a solution is related to a resistance value of the solution. A large resistance value means poor conductivity, and a small resistance value means good conductivity. According to the Ohm's law, when the temperature is constant, the resistance value of the solution is inversely proportional to a vertical cross-sectional area of an electrode and directly proportional to a distance between the electrodes. The resistance is measured in ohms (Ω), and the resistivity is measured in ohms (Ω·M).

### National standards for parameter tests:

The conductivity test of the electrolyte can be performed using instruments and methods known in the art. For example, reference can be made to the standard HG/T4067-2015.

### Test methods:

### (1) Density meter method, also known as reference method.

An instrument test temperature is set to 20°C, a sample is injected into a test cell of the instrument, then the test is performed, and the data is read.

### (2) Density meter method

A dry, clean, corrosion-resistant sample bottle is used to take about 100 mL of sample, sealed, placed in a constant-temperature water bath at 25°C ± 0.5°C, and shaken intermittently. When the sample temperature is constant, a sample bottle cap is replaced with a rubber stopper with an electrode inserted. When the temperature is within the range of 25°C ± 0.5°C, the data is read in a conductivity meter, which is the conductivity of the sample under test.

The exhaust rate of the exhaust assembly is defined as the volume of gas discharged by the battery cell in one day. A higher exhaust rate is more conducive to discharging the gas inside the battery cell. However, the presence of the exhaust assembly 90 reduces the airtightness of the battery system to a certain extent, and external water vapor easily enters the housing through the exhaust assembly 90, resulting in degradation of the battery performance. Therefore, an exhaust assembly 90 with a relatively high exhaust rate cannot be designed just to meet the exhaust requirements.

Test principle of exhaust rate is as follows: The test is performed based on the standard GB/T1038-2000. Specifically, the exhaust assembly separates a low-pressure chamber from a high-pressure chamber. The high-pressure chamber is filled with an experimental gas of approximately 10⁵ Pa (that is, 0.1 MPa). A volume of the low-pressure chamber is known. After the sample is sealed, the air in the low-pressure chamber is pumped to close to zero (that is, vacuumized) with a vacuum pump. A pressure increase ΔP in the low-pressure chamber is measured with a pressure gauge, and the amount of gas passing from a high-pressure side through a membrane (sheet) to the low-pressure chamber as a function of time can be determined, but an initial stage where the gas permeation rate changes with time should be excluded. A gas permeation amount and a gas permeation coefficient can be calculated by a computer attached to the instrument according to the specified program and output to a floppy disk or printed on recording paper, or can be calculated according to a test fixed value.

In the solution of this application, the gas production behaviors of electrolytes with different conductivities are fully studied, and battery cells with electrolytes having different conductivities match with exhaust assemblies with different exhaust rates, which can address the conflict between high conductivity requirements and high gas production amounts. In addition, some battery systems that do not require high conductivity do not need to match with exhaust assemblies with high exhaust capacities, so as to reduce the impact of external water vapor intrusion on the battery during an exhaust process.

In an embodiment, when the conductivity of the electrolyte system in the battery cell is in the range of 2 ms/cm to 16 ms/cm, the exhaust rate of the exhaust assembly on the battery cell may be controlled in the range of 0.6 mL/day to 10.0 mL/day. This can meet the most basic ventilation requirements and reduce the intrusion of external water vapor.

In an embodiment, the conductivity of the electrolyte satisfies: 8 ms/cm ≤ conductivity ≤ 16 ms/cm, and the exhaust rate of the exhaust assembly satisfies: 3.3 mL/day ≤ exhaust rate ≤ 10.0 mL/day.

In this case, a high conductivity of the electrolyte leads to a high ion migration speed and a large gas production amount of the battery cell. Therefore, the electrolyte can match with an exhaust assembly with a high exhaust rate to discharge the gas in a timely manner.

Further, the exhaust rate of the exhaust assembly may alternatively be 4.5 mL/day to 8.0 mL/day. This allows for a more precise matching between the exhaust rate and the electrolyte conductivity, thereby guaranteeing the safety performance and service life of the battery cell while improving the charging capacity and energy density of the battery cell.

In another embodiment, matching schemes between electrolytes with different conductivities and exhaust assemblies may alternatively be as follows: an electrolyte with a conductivity of 8 ms/cm to 10 ms/cm matches with an exhaust assembly with an exhaust rate of 3.3 mL/day to 5.0 mL/day; an electrolyte with a conductivity of 10 ms/cm to 12 ms/cm matches with an exhaust assembly with an exhaust rate of 5.0 mL/day to 6.7 mL/day; an electrolyte with a conductivity of 11 ms/cm to 14 ms/cm matches with an exhaust assembly with an exhaust rate of 4.5 mL/day to 9.0 mL/day; and an electrolyte with a conductivity of 14 ms/cm to 16 ms/cm matches with an exhaust assembly with an exhaust rate of 8.4 mL/day to 10.0 mL/day.

In an embodiment, the conductivity of the electrolyte satisfies: 2 ms/cm ≤ conductivity ≤ 8 ms/cm, and the exhaust rate of the exhaust assembly satisfies: 0.6 mL/day ≤ exhaust rate ≤ 5.0 mL/day.

In this case, a low conductivity of the electrolyte leads to a low ion migration speed and a small gas production amount. Therefore, the electrolyte matches with an exhaust assembly with a low exhaust rate to discharge the gas inside the battery in a timely manner and reduce the probability of external impurities (air, moisture, dust, and the like) entering the battery cell.

Further, the exhaust rate of the exhaust assembly may alternatively be 1.3 mL/day to 3.9 mL/day. This allows a more precise matching between the exhaust rate and the electrolyte conductivity, thereby guaranteeing the safety performance and service life of the battery cell.

In another embodiment, matching schemes between electrolytes with different conductivities and exhaust assemblies may alternatively be as follows: an electrolyte with a conductivity of 2 ms/cm to 4 ms/cm matches with an exhaust assembly with an exhaust rate of 0.6 mL/day to 2.1 mL/day; an electrolyte with a conductivity of 4 ms/cm to 6 ms/cm matches with an exhaust assembly with an exhaust rate of 1.3 mL/day to 3.9 mL/day; and an electrolyte with a conductivity of 6 ms/cm to 8 ms/cm matches with an exhaust assembly with an exhaust rate of 3.6 mL/day to 5.0 mL/day.

According to some embodiments of this application, the exhaust assembly 90 includes a gas-permeable membrane assembly 40. The gas-permeable membrane assembly 40 includes a gas-permeable membrane 41. The gas-permeable membrane 41 is configured to allow the gas inside the battery cell 20 to be discharged through the gas-permeable membrane 41.

According to some embodiments of this application, the gas-permeable membrane assembly 40 includes a gas-permeable membrane 41. The gas-permeable membrane 41 is made of a gas-permeable material and has good gas permeability, which can allow gas molecules to pass through. The gas-permeable membrane assembly 40 is used as the exhaust assembly 90, so that the gas inside the battery cell 20 can be discharged through the gas-permeable membrane 41 in a sealed state, and the gas inside the battery cell can be discharged to the outside of the housing in a timely manner, thereby preventing the air pressure inside the battery cell from being excessively high, preventing the pressure relief mechanism from opening the valve in advance, and greatly prolonging the battery life.

Further, the gas-permeable membrane also has liquid barrier properties and blocks the passage of liquid. Therefore, the gas-permeable membrane can block the overflow of the electrolyte while discharging the gas. In addition, the gas-permeable membrane can also block external water vapor, dust, and other impurities from entering the battery cell, protect the internal environment of the battery cell, and effectively improve the reliability of the battery cell. The gas-permeable membrane also has good weather resistance, chemical corrosion resistance, and structural stability. If used in an automotive power battery, the gas-permeable membrane also needs to have oleophobicity. Therefore, a material of the gas-permeable membrane can be selected from polymer materials, such as polytetrafluoroethylene and polypropylene. In addition, since the gas generated inside the battery causes the internal pressure to rise rapidly, the gas-permeable membrane needs to have specified mechanical strength and elasticity.

The gas permeation rate of the gas-permeable membrane assembly 40 depends on the characteristics of the gas-permeable membrane 41. A polymer film with certain pores may be used as the gas-permeable membrane 41. Materials with different porosities may be used for preparing gas-permeable membranes 41 with different gas permeation rates. For example, a gas permeation rate of the gas-permeable membrane 41 may be 0.5 mL/day, 1.0 mL/day, 1.5 mL/day, 2.5 mL/day, 3.0 mL/day, 3.5 mL/day, 4.0 mL/day, 5.0 mL/day, 6.5 mL/day, 8.5 mL/day, 9.0 mL/day, 9.5 mL/day, or 10.0 mL/day. The gas permeability of the gas-permeable membrane is tested at 23°C, 0% RH (humidity is 0%), and an air pressure of 0.1 MPa.

According to some embodiments of this application, the gas-permeable membrane includes a first gas-permeable membrane, and a gas permeation rate of the first gas-permeable membrane is 3 mL/day to 4 mL/day.

According to some embodiments of this application, the gas-permeable membrane includes a second gas-permeable membrane, and a gas permeation rate of the second gas-permeable membrane is 9 mL/day to 10 mL/day.

According to some embodiments of this application, the exhaust assembly 90 includes a one-way valve 30. The one-way valve 30 is configured to actuate and release the gas inside the battery cell 20 when the internal air pressure of the battery cell 20 reaches a threshold. In other words, the one-way valve 30 is configured to discharge the gas inside the housing, that is, the one-way valve 30 can be opened in one direction for exhaust, so that the gas inside the housing can be discharged to the outside of the housing through the one-way valve 30.

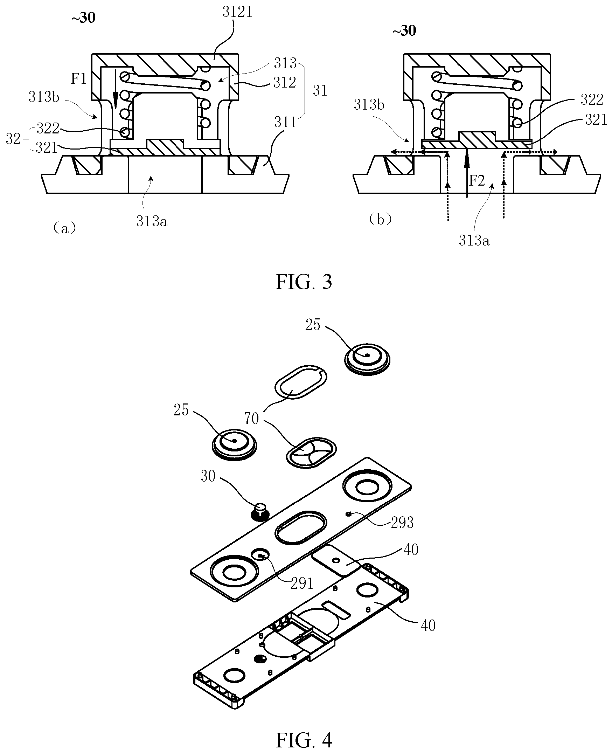

Referring to FIG. 3, FIG. 3 is a schematic cross-sectional structural diagram of a one-way valve according to one or more embodiments. According to some embodiments of this application, the one-way valve 30 includes a valve body 31 and a valve core 32. The valve body 31 has a valve cavity 313 inside. The valve body 31 is provided with an air inlet 313a and an air outlet 313b. The air inlet 313a enables communication between the valve cavity 313 and the inside of the housing. The air outlet 313b enables communication between the valve cavity 313 and the outside of the housing. The valve core 32 is disposed in the valve cavity 313. The valve core 32 is configured to block an air inlet channel of the valve cavity 313. The valve core 32 is configured to open the air inlet channel under the action of the gas inside the housing and release the gas inside the battery cell.

As shown in FIG. 3, (a) in FIG. 3 is a schematic diagram of the one-way valve in a non-opened state; and (b) in FIG. 3 is a schematic diagram of the one-way valve in an opened state. The valve core 32 includes an elastic member 322 and a blocking member 321. The elastic member 322 provides an elastic force F1 to the blocking member 321, and the blocking member 321 is pressed to block the air inlet 313a. When a force F2 of the gas inside the housing acting on the blocking member 321 is greater than the elastic force F1 of the elastic member, the gas inside the housing can overcome the elastic force of the elastic member and push the blocking member 321 to open the air inlet 313a, so that the gas inside the housing can enter the valve cavity 313 and then be discharged to the outside of the housing through the air outlet 313b. Conversely, after the gas inside the housing is discharged and the force F2 of the gas inside the housing acting on the blocking member 321 is less than the elastic force F1 of the elastic member, the elastic member 322 can drive the blocking member 321 to reset to block the air inlet 313a.

Specifically, when the air pressure inside the housing increases to a specified value P1, the force F2 is applied by the air pressure to a lower surface of the blocking member 321. When the force F2 is greater than a spring pressing force F1, a sealing interface fails, and the gas inside the housing is discharged to the outside of the housing through the channel in the valve body 31. As the gas inside the housing is discharged, the internal air pressure decreases. When the air pressure reaches a specified value P2, the valve body 31 is closed to achieve sealing. The valve body 31 can be repeatedly opened for gas exhaust and closed, so that the air pressure inside the housing is maintained between P1 and P2, thereby preventing the pressure relief mechanism from opening the valve in advance due to an excessively high air pressure inside the housing. In other words, the one-way valve requires a specified pressure threshold to be opened.

According to some embodiments of this application, an opening pressure of the valve core is greater than or equal to 0.2 MPa, further greater than or equal to 0.4 MPa, and further greater than or equal to 0.8 MPa. For example, the opening pressure may be 0.20 MPa, 0.25 MPa, 0.30 MPa, 0.35 MPa, 0.40 MPa, 0.45 MPa, 0.50 MPa, 0.55 MPa, 0.60 MPa, 0.65 MPa, 0.70 MPa, 0.75 MPa, 0.80 MPa, or the like.

The test method and principle for the opening pressure of the one-way valve are as follows: Test can be performed based on the helium leakage standard. The helium leakage standard is defined as: if the leakage rate is less than 10^-6 Pa·m^3/s, the system is considered to be sealed, and if the leakage rate is greater than 10^-6 Pa·m^3/s, it indicates that the system has gas leakage.

During detection, the one-way valve is used to seal the test chamber, helium is filled into a test chamber, and a helium detector is used to monitor the amount of helium in the environment where the test chamber is located. If helium is detected and the leakage rate is greater than 10^-6 Pa·m^3/s, it indicates that the test chamber is no longer sealed and helium leakage occurs. The helium leakage rate is continuously monitored. When the leakage rate is greater than 10^-5 Pa·m^3/s, it is determined that the one-way valve is opened to release gas, and the pressure of the test chamber at this point is recorded as the opening pressure of the one-way valve.

According to some embodiments of this application, the structure of the exhaust assembly may be used according to the required exhaust rate of the exhaust assembly. The exhaust assembly may include a gas-permeable membrane assembly, that is, the gas-permeable membrane assembly is used as the exhaust assembly. The exhaust assembly may alternatively include a one-way valve, that is, the one-way valve is used as the exhaust assembly. In another embodiment, the exhaust assembly may alternatively include both the one-way valve and the gas-permeable membrane assembly.

According to some embodiments of this application, a gas-permeable membrane assembly or a one-way valve is used as the exhaust assembly. For example, a gas-permeable membrane assembly containing a first gas-permeable membrane may be used alone, or a gas-permeable membrane assembly containing a second gas-permeable membrane may be used alone, or a one-way valve with an opening pressure greater than 0.4 MPa may be used alone; or a gas-permeable membrane assembly containing a second gas-permeable membrane is used, or a one-way valve with an opening pressure greater than 0.2 MPa may be used alone.

According to some embodiments of this application, the exhaust assembly 90 includes a gas-permeable membrane assembly 40 and a one-way valve 30. The wall portion has a first exhaust hole 291. The first exhaust hole 291 enables communication between the inside of the housing and the outside of the housing. The battery cell 20 is configured such that a gas discharged through the first exhaust hole 291 flows through the one-way valve 30 and the gas-permeable membrane assembly 40.

As shown in FIG. 2, the first exhaust hole 291 enables communication between the inside of the housing and the outside of the housing, that is, the first exhaust hole 291 is a through hole, and the gas inside the housing of the battery cell 20 can be discharged through the first exhaust hole 291 to regulate the pressure inside the housing of the battery cell 20. The battery cell 20 is configured such that the gas discharged through the first exhaust hole 291 flows through the one-way valve 30 and the gas-permeable membrane assembly 40, which means that when the gas is discharged through the first exhaust hole 291, the gas also flows through a one-way valve 30 and a gas-permeable membrane assembly 40 that belong to a same exhaust assembly 90; or a discharge path of the gas needs to pass through both the one-way valve 30 and the gas-permeable membrane assembly 40; or the one-way valve 30 and the gas-permeable membrane assembly 40 in the same exhaust assembly 90 are connected in series, and when the gas flows through the exhaust assembly 90, the gas flows through the one-way valve 30 and the gas-permeable membrane assembly 40 in the exhaust assembly 90 in sequence. The gas may first flow through the gas-permeable membrane assembly 40 and then flow through the one-way valve 30; or the gas may first flow through the one-way valve 30 and then flow through the gas-permeable membrane assembly 40. The flow sequence can be set as required, but the gas need to flow through the two structures, rather than part of the gas only flowing through the one-way valve 30 to be discharged and another part of the gas only flowing through the gas-permeable membrane assembly to be discharged. One first exhaust hole 291 is provided on the end cover 21, or a plurality of first exhaust holes 291 are provided on the end cover 21. When the plurality of first exhaust holes 291 are provided, each first exhaust hole 291 is equipped with one group of exhaust assemblies 90, and when the gas is discharged through the first exhaust hole 291, the gas flows through a one-way valve 30 and a gas-permeable membrane assembly 40 in an exhaust assembly 90 disposed at the first exhaust hole 291.

In these embodiments, the gas-permeable membrane assembly 40 and the one-way valve 30 are connected in series, so that the presence of the one-way valve 30 can control the system such that the system is not always in a ventilated state, but the one-way valve 30 is activated to exhaust only when a specified threshold is accumulated, which can protect the airtightness of the system of the battery cell 20 and reduce the probability of external water vapor entering the system of the battery cell 20. In addition, the presence of the gas-permeable membrane 41 can block the overflow of the electrolyte, and when the one-way valve 30 is opened, the gas-permeable membrane 41 can seal the battery system, so that the gas inside the battery cell 20 can be discharged through the gas-permeable membrane 41 and the one-way valve 30 in a sealed state, thereby alleviating the disadvantage that when the one-way valve 30 exhausts, the system of the battery cell 20 is in an open state and is easily invaded by external water vapor.

According to some embodiments of this application, when the exhaust assembly 90 includes a gas-permeable membrane assembly 40 and a one-way valve 30, and the gas-permeable membrane assembly 40 and the one-way valve 30 are connected in series, gas-permeable membranes 41 with different gas permeation rates and one-way valves 30 with different opening pressures can be matched.

According to some embodiments of this application, the opening pressure of the one-way valve 30 is greater than or equal to 0.4 MPa. The gas-permeable membrane assembly 40 includes a second gas-permeable membrane. A gas permeation rate of the second gas-permeable membrane is 9 mL/day to 10 mL/day.

Referring to FIG. 4, FIG. 4 is a schematic structural exploded view of a battery cell according to one or more embodiments. According to some embodiments of this application, the exhaust assembly 90 includes a gas-permeable membrane assembly 40 and a one-way valve 30. The wall portion has a first exhaust hole 291 and a third exhaust hole 293 spaced apart. The first exhaust hole 291 and the third exhaust hole 293 each enable communication between the inside of the housing and the outside of the housing. The battery cell 20 is configured such that a gas discharged through the first exhaust hole 291 flows through the one-way valve 30, and a gas discharged through the third exhaust hole 293 flows through the gas-permeable membrane assembly 40.

The first exhaust hole 291 enables communication between the inside of the housing and the outside of the housing, and the third exhaust hole 293 also enables communication between the inside of the housing and the outside of the housing, that is, the two are two independent holes that can exhaust at the same time to regulate the pressure inside the housing of the battery cell 20. One first exhaust hole 291 and one third exhaust hole 293 may be provided on the end cover 21, or a plurality of first exhaust holes 291 and a plurality of third exhaust holes 293 are provided on the end cover 21. The battery cell 20 is configured such that the gas discharged through the first exhaust hole 291 flows through the one-way valve 30 and the gas discharged through the third exhaust hole 293 flows through the gas-permeable membrane assembly 40, which means that the gas can be discharged from the battery cell 20 through both the first exhaust hole 291 and the third exhaust hole 293. When the gas is discharged through the first exhaust hole 291, the gas flows through the one-way valve 30, and when the gas is discharged through the third exhaust hole 293, the gas flows through the gas-permeable membrane assembly 40; or the one-way valve 30 and the gas-permeable membrane assembly 40 are connected in parallel. When the gas flows through the exhaust assembly 90, the gas may flow through both the one-way valve 30 and the gas-permeable membrane assembly 40 in the exhaust assembly 90, that is, part of the gas is discharged only through the one-way valve 30, and another part of the gas is discharged only through the gas-permeable membrane assembly 40. When a plurality of first exhaust holes 291 are provided, each first exhaust hole 291 is equipped with one one-way valve 30; and when a plurality of third exhaust holes 293 are provided, each third exhaust hole 293 is equipped with one gas-permeable membrane assembly 40.

In these embodiments, the gas-permeable membrane assembly 40 and the one-way valve 30 are connected in parallel, so that when the internal air pressure of the battery cell 20 is low, the gas is mainly discharged through the gas-permeable membrane assembly 40, and when the internal air pressure of the battery cell 20 is high, the gas is mainly discharged through the one-way valve 30. This reduces the problem of frequent opening of the one-way valve 30 caused by unstable internal air pressure of the battery cell 20, reduces the intrusion of external water vapor, and improves the airtightness of the system of the battery cell 20. In addition, when the air pressure is low, the gas can be discharged through the gas-permeable membrane assembly 40 in a timely manner, helping the exhaust assembly 90 to adapt to different air pressure environments, thereby improving the flexibility of the exhaust assembly 90.

According to some embodiments of this application, when the exhaust assembly 90 includes the gas-permeable membrane assembly 40 and the one-way valve 30, and the gas-permeable membrane assembly 40 and the one-way valve 30 are connected in parallel, gas-permeable membranes 41 with different gas permeation rates and one-way valves 30 with different opening pressures can be matched.

According to some embodiments of this application, the opening pressure of the one-way valve 30 is greater than or equal to 0.4 MPa. The gas-permeable membrane assembly 40 includes a second gas-permeable membrane. A gas permeation rate of the second gas-permeable membrane is 3 mL/day to 4 mL/day.

According to some embodiments of this application, the exhaust assembly adopts a gas-permeable membrane assembly and a one-way valve connected in series, or a gas-permeable membrane assembly and a one-way valve connected in parallel. For example, the exhaust assembly may adopt a gas-permeable membrane assembly with a second gas-permeable membrane and a one-way valve with an opening pressure greater than 0.4 MPa that are combined in series.

According to some embodiments of this application, the exhaust assembly adopts a gas-permeable membrane assembly and a one-way valve connected in series, or a gas-permeable membrane assembly and a one-way valve connected in parallel. For example, the exhaust assembly may adopt a gas-permeable membrane assembly with a first gas-permeable membrane and a one-way valve with an opening pressure greater than 0.8 MPa that are combined in parallel.

In another embodiment, the one-way valve 30 and the gas-permeable membrane assembly 40 in the exhaust assembly may alternatively be connected in series-parallel, that is, the exhaust assembly may include both a one-way valve 30 and a gas-permeable membrane assembly 40 connected in series and a one-way valve 30 and a gas-permeable membrane assembly 40 connected in parallel.

According to some embodiments of this application, the matching scheme between the electrolyte conductivity and the exhaust assembly provided by this application may be applied to an alkali metal battery that may be a lithium metal battery, a sodium metal battery, a potassium metal battery, a zinc metal battery, an aluminum metal battery, or the like. Certainly, the matching scheme may also be applied to a battery of another type, such as a lithium-ion battery or a sodium-ion battery.

According to some embodiments of this application, a gas production rate of a battery to which the matching scheme between the electrolyte conductivity and the exhaust assembly provided by this application is applied is as follows: a gas production rate of the battery cell satisfies: 0.006 mL/Ah/D ≤ gas production rate ≤ 0.066 mL/Ah/D.

Optionally, the gas production rate of the battery cell satisfies: 0.013 mL/Ah/D ≤ gas production rate ≤ 0.026 mL/Ah/D. In this case, the gas production rate of the battery cell is low. The electrolyte matches with the exhaust assembly. The conductivity of the electrolyte is 2 ms/cm to 8 ms/cm, and the exhaust rate of the exhaust assembly is 0.6 mL/day to 5.0 mL/day.

Optionally, the gas production rate of the battery cell satisfies: 0.045 mL/Ah/D ≤ gas production rate ≤ 0.060 mL/Ah/D. In this case, the gas production rate of the battery cell is high. The electrolyte matches with the exhaust assembly. The conductivity of the electrolyte is 8 ms/cm to 16 ms/cm. The exhaust rate of the exhaust assembly is 3.3 mL/day to 10.0 mL/day.

According to some embodiments of this application, a residual space V of the battery to which the matching scheme between the electrolyte conductivity and the exhaust assembly provided by this application is applied satisfies: 0.5 mL/Ah ≤ V ≤ 3.5 mL/Ah, which may be 0.5 mL/Ah ≤ V ≤ 2 mL/Ah, 0.8 mL/Ah ≤ V ≤ 1.5 mL/Ah, 2.0 mL/Ah ≤ V ≤ 3.5 mL/Ah, 2.5 mL/Ah ≤ V ≤ 3.0 mL/Ah, or the like. An appropriate exhaust assembly may be used in combination with the capacity and residual space of the battery.

The residual space is defined as the remaining volume space inside the housing body after the housing of the battery cell is filled with the electrolyte.

Test conditions: A cell after baking (Baking), an electrolyte with a known density, a vacuum box, an electrolyte injector, and two aluminum plate fixtures are provided.

Operation steps are as follows:
1. A mass of the cell after baking is measured and recorded.
2. The fixtures are used to clamp the cell tightly to prevent bulging and deformation.
3. A nozzle of the electrolyte injector is aligned with an electrolyte injection port of the cell, a certain amount of electrolyte is poured, the cell is placed in a vacuum box for vacuumizing, and the cell is left standing at room temperature for 24 h or more until the cell is filled with the electrolyte.
4. After the cell is filled with the electrolyte, the fixtures are removed and the cell is weighed, and the mass of the cell filled with the electrolyte is recorded.

Data processing: An electrolyte retention amount is subtracted from a mass difference before and after the full-filling test, conversion of an electrolyte density is performed to obtain a residual space volume of the cell after electrolyte injection.

According to some embodiments of this application, the electrolyte of the battery to which the matching scheme between the electrolyte conductivity and the exhaust assembly provided by this application is applied includes one or more of chain ethers, ethylene glycol dimethyl ether and derivatives thereof, diethylene glycol dimethyl ether, triethylene glycol dimethyl ether, tetraethylene glycol dimethyl ether, and cyclic ethers.

According to some embodiments of this application, a positive electrode plate of the battery to which the matching scheme between the electrolyte conductivity and the exhaust assembly provided by this application is applied includes a positive electrode current collector and a positive electrode active layer disposed on the positive electrode current collector. The positive electrode active layer includes a positive electrode active material. The positive electrode active material includes one or more of a polyanionic positive electrode material, a phosphate positive electrode material, a sulfate positive electrode material, a silicate positive electrode material, and a borate positive electrode material.

According to some embodiments of this application, a negative electrode plate of the battery to which the matching scheme between the electrolyte conductivity and the exhaust assembly provided by this application is applied includes a negative electrode current collector and a carbon-containing coating provided on the negative electrode current collector. The carbon-containing coating includes a carbon-containing material. The carbon-containing material includes one or more of conductive carbon, graphite, hard carbon, and carbon nanotubes.

In an embodiment, the exhaust assembly 90 is disposed on the wall portion of the housing of the battery cell 20. The housing includes an end cover 21 and a housing body 22. The wall portion may be a wall of the end cover 21 or a wall of the housing body 22. That is, the exhaust assembly 90 may be disposed on the end cover 21 or the housing body 22. In other words, the wall portion for installing the exhaust assembly 90 may be the end cover 21 of the housing or a wall of the housing body 22 of the housing. Exemplarily, the wall portion is the end cover 21. Certainly, the structure of the battery cell is not limited to this. In another embodiment, the wall portion may alternatively be a bottom wall of the housing body opposite the end cover. The wall portion may alternatively be side walls of the end cover of the housing body that are adjacent to and connected to each other. In an embodiment, the exhaust assembly is preferably disposed on a wall facing upward at a top of the battery cell in a placed state. The following describes the solution of this application by taking the wall portion being the wall of the end cover 21 as an example, but this should not limit this application.

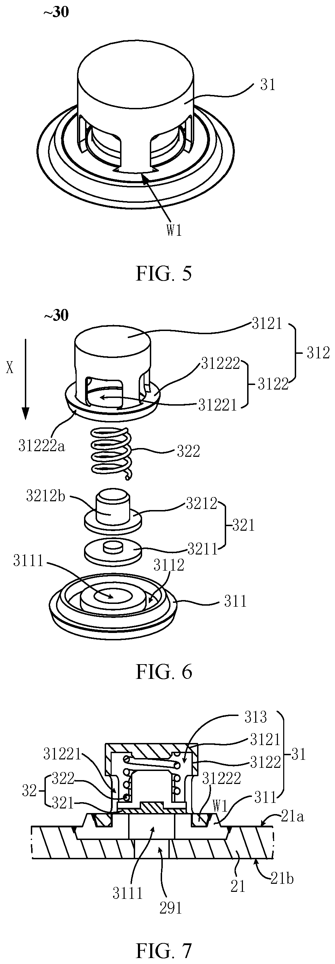

Referring to FIGs. 5, 6, and 7, FIG. 5 is a front view of a one-way valve according to one or more embodiments, FIG. 6 is a schematic structural exploded view of a one-way valve according to one or more embodiments, and FIG. 7 is a schematic partial cross-sectional structural diagram of a battery cell according to one or more embodiments. According to some embodiments of this application, the end cover 21 includes an outer surface 21a and an inner surface 21b disposed back to back. The outer surface 21a faces the outside of the housing. The inner surface 21b faces the inside of the housing. A one-way valve 30 is disposed on the end cover 21. A valve body 31 of the one-way valve 30 faces the outside of the housing, and the valve body 31 at least partially protrudes from the outer surface 21a of the end cover 21.

In these embodiments, the one-way valve 30 includes the valve body 31 and a valve core 32. The valve body 31 has a valve cavity 313 inside. The valve core 32 is disposed in the valve cavity 313. The valve body 31 includes a valve seat 311 and a valve cover 312. The valve cover 312 includes a cover top wall 3121 and a cover side wall 3122 connected to the cover top wall 3121. The cover top wall 3121, the cover side wall 3122, and the valve seat 311 enclose the valve cavity 313. The valve seat 311 is provided with an air inlet of the valve cavity 313 to enable communication between the valve cavity 313 and the inside of the housing. The valve cover 312 is provided with an air outlet of the valve cavity 313 to enable communication between the valve cavity 313 and the outside of the housing. The valve core 32 is configured to block an air inlet channel of the valve cavity 313, and the valve core 32 is configured to open the air inlet channel under the action of the gas inside the housing and release the gas inside the battery cell.

Still referring to FIGs. 5 and 6, according to some embodiments of this application, the valve seat 311 has a first through hole 3111 running through the valve seat 311. The air inlet is the first through hole 3111, that is, the first through hole 3111 is used as the air inlet of the valve cavity 313. The cover side wall 3122 has a second through hole 31221 running through the cover side wall 3122. The air outlet is the second through hole 31221, that is, the second through hole 31221 is used as the air outlet of the valve cavity 313. This arrangement can facilitate the outward transmission of the gas inside the battery.

According to some embodiments of this application, along a direction facing away from the cover top wall 3121, the second through hole 31221 extends to an end of the cover side wall 3122. As shown in FIG. 6, the direction facing away from the cover top wall 3121 is a direction from the cover top wall 3121 to the valve seat 311 (a direction X in the figure). The second through hole 31221 is formed by removing a partial structure of the cover side wall 3122. Along the direction X, the cover side wall 3122 is directly hollowed out to a bottom end of the cover side wall 3122. In a further embodiment, along the direction X, a lower opening surface of the second through hole 31221 may be flush with a sealing surface of the blocking member 321. Through this arrangement, when the one-way valve 30 is opened to exhaust, that is, when the blocking member 321 opens the sealing interface, the liquid electrolyte carried out with the gas can be discharged outward in a timely manner, so that the electrolyte is not easy to accumulate on an outer edge of the blocking member 321, thereby effectively ensuring the sealing and repeated opening functions of the one-way valve 30.

According to some embodiments of this application, a plurality of second through holes 31221 are provided, and the plurality of second through holes 31221 are spaced apart in a circumferential direction of the cover side wall 3122. Through this arrangement, when the one-way valve 30 is opened to exhaust, the gas can be discharged more quickly, shortening the exhaust time, that is, shortening the time in which the battery cell is in an open state, so as to reduce the intrusion of external water vapor into the battery system during the valve opening period.

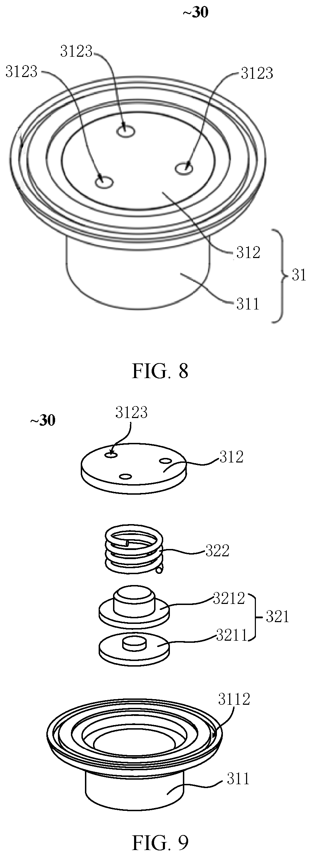

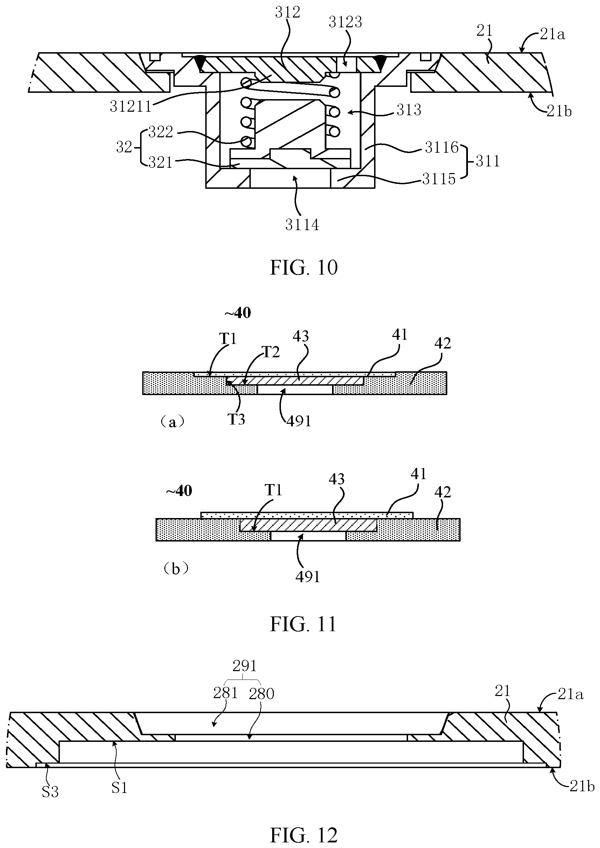

Referring to FIGs. 8, 9, and 10, FIG. 8 is a front view of a one-way valve according to one or more embodiments, FIG. 9 is a schematic structural exploded view of a one-way valve according to one or more embodiments, and FIG. 10 is a schematic partial cross-sectional structural diagram of a battery cell according to one or more embodiments. According to some embodiments of this application, the end cover 21 includes an outer surface 21a and an inner surface 21b disposed back to back. The outer surface 21a faces the outside of the housing. The inner surface 21b faces the inside of the housing. A one-way valve 30 is disposed on the end cover 21. A valve body 31 of the one-way valve 30 faces the inside of the housing, and the valve body 31 at least partially protrudes from the inner surface 21b of the end cover 21. That is, the valve body 31 extends into the housing along a thickness direction of the end cover 21.

In these embodiments, the one-way valve 30 includes a valve body 31 and a valve core 32. The valve body 31 has a valve cavity 313 inside. The valve core 32 is disposed in the valve cavity 313. The valve body 31 includes a valve seat 311 and a valve cover 312. The valve seat 311 includes a seat bottom wall 3115 and a seat side wall 3116 connected to the seat bottom wall 3115. The valve cover 312 is disposed at an end of the valve seat 311 away from the seat bottom wall 3115. The valve cover 312, the seat side wall 3116, and the seat bottom wall 3115 enclose the valve cavity 313. The valve seat 311 is provided with an air inlet of the valve cavity 313 to enable communication between the valve cavity 313 and the inside of the housing. The valve core 32 is configured to block an air inlet channel of the valve cavity 313. The valve core 32 is configured to open the air inlet channel under the action of the gas inside the housing and release the gas inside the battery cell.

Still referring to FIGs. 8, 9, and 10, according to some embodiments of this application, the valve seat 311 has a fourth through hole 3114 running through the seat bottom wall 3115. The air inlet is the fourth through hole 3114, that is, the fourth through hole 3114 is used as the air inlet of the valve cavity 313. Certainly, in another embodiment, the air inlet may alternatively be provided on an outer peripheral surface of a portion of the valve body 311 extending into the housing. When the air inlet is provided on the outer peripheral surface of the portion of the valve body 311 extending into the housing, an arrangement direction of the valve core 32 changes accordingly. The blocking member 321 is movably disposed in the valve cavity 313 along a radial direction of the valve seat 311, so that the valve core blocks the air inlet.

Still referring to FIGs. 8, 9, and 10, according to some embodiments of this application, the air outlet may be directly formed on the valve cover, that is, the air outlet is a channel provided on the valve cover. Specifically, the valve cover 312 has a fifth through hole 3123 running through the valve cover 312. The air outlet is the fifth through hole 3123, that is, the fifth through hole 3123 is used as the air outlet of the valve cavity 313. This arrangement can facilitate the outward transmission of the gas inside the battery.

One or more fifth through holes 3123 may be provided on the valve cover 312. Exemplarily, in FIGs. 8 and 9, three fifth through holes 3123 are provided on the valve cover 312. Certainly, in another embodiment, the number of fifth through holes 3123 provided on the valve cover 312 may alternatively be two, four, five, six, or the like. As an example, a plurality of fifth through holes 3123 are provided on the valve cover 312, and the plurality of fifth through holes 3123 are arranged at equal intervals. As an example, the plurality of fifth through holes 3123 are arranged at equal intervals around the center of the valve cover 312, which can make the gas flow out more smoothly.

Referring to FIG. 11, FIG. 11 is a schematic cross-sectional structural diagram of a gas-permeable membrane assembly according to one or more embodiments. According to some embodiments of this application, the gas-permeable membrane assembly 40 further includes a metal member 42, that is, the gas-permeable membrane assembly 40 includes a gas-permeable membrane 41 and a metal member 42. The metal member 42 is configured for carrying the gas-permeable membrane 41. Specifically, the metal member 42 is provided with a first gas-permeable hole 491. The gas-permeable membrane 41 is disposed on the metal member 42, and the gas-permeable membrane 41 covers the first gas-permeable hole 491.

The metal member 42 can support the gas-permeable membrane 41 to protect the gas-permeable membrane 41 from excessive deformation. In addition, the metal member 42 may also serve as a medium for connecting the gas-permeable membrane assembly 40 to other components. The gas-permeable membrane 41 is connected to the other components through the metal member 42 to improve the stability of the connection. The metal member 42 is provided with at least one first gas-permeable hole 491 which serves as a release channel for the gas inside the battery such that the gas can pass through the metal member 42. The shape of the first gas-permeable hole 491 includes geometric shapes such as circle, square, and ellipse. The metal member 42 may alternatively be provided with a plurality of first gas-permeable holes 491. The aperture, shape, and arrangement manner of the first gas-permeable holes 491 are not specifically limited here. Optionally, the aperture of the first gas-permeable holes 491 may be less than or equal to an aperture of the exhaust hole on the battery cell.

Still referring to FIG. 11, according to some embodiments of this application, the gas-permeable membrane assembly 40 further includes a backing member 43, that is, the gas-permeable membrane assembly 40 includes a gas-permeable membrane 41, a metal member 42, and a backing member 43. The gas-permeable membrane 41 is disposed on the metal member 42. The backing member 43 is disposed between the gas-permeable membrane 41 and the metal member 42, and the backing member 43 is configured to support the gas-permeable membrane 41 and allow a gas passing through the gas-permeable membrane 41 to pass through.

The backing member 43 can support the gas-permeable membrane 41, so that the gas-permeable membrane 41 is less prone to deformation. The backing member 43 is made of a material with better gas permeability than the gas-permeable membrane 41 so as not to affect the gas permeation process of the gas-permeable membrane 41. The backing member 43 also has characteristics such as corrosion resistance and high temperature resistance. The backing member 43 is made of various types of materials including porous polymers such as polypropylene, polyamide, polytetrafluoroethylene, and polyperfluoroethylene propylene, as well as metal-organic framework porous materials, carbon films, ceramic porous materials, and the like. This is not limited here.

Still referring to FIG. 11, according to some embodiments of this application, the metal member 42 has a first annular step surface T1 and a second annular step surface T2 recessed relative to a surface of the metal member 42 and a transition surface T3. The first annular step surface T1 is disposed around the second annular step surface T2. The transition surface T3 is connected to the first annular step surface T1 and the second annular step surface T2. The first annular step surface T1 is closer to the surface of the metal member 42 than the second annular step surface T2. The second annular step surface T2 is disposed around the first gas-permeable hole 491. The backing member 43 is disposed on the second annular step surface T2. The gas-permeable membrane 41 is disposed on the first annular step surface T1.

The first annular step surface T1 and the second annular step surface T2 are formed by recessing the surface of the metal member 42 inward. The metal member 42 may be stamped to form the recessed first annular step surface T 1 and second annular step surface T2, or the metal member 42 can be etched to remove a partial structure to form the recessed first annular step surface T1 and second annular step surface T2. Recess depths of the first annular step surface T1 and the second annular step surface T2 relative to the surface of the metal member 42 can be set according to thicknesses of the gas-permeable membrane 41 and the backing member 43. Preferably, the recess depth of the second annular step surface T2 relative to the first annular step surface T1 (that is, a height of the transition surface T3) is equal to the thickness of the backing member 43, so that the second annular step can accommodate the backing member 43, and a side surface of the backing member 43 facing the gas-permeable membrane 41 is flush with the first annular step surface T1. Further, the recess depth of the first annular step surface T1 relative to the surface of the metal member 42 is equal to the thickness of the gas-permeable membrane 41, so that the first annular step can accommodate the gas-permeable membrane 41, and a side surface of the gas-permeable membrane 41 away from the metal member 42 is flush with the surface of the metal member 42.

A recessed step is provided on the metal member 42, so that the surface of the gas-permeable membrane 41 may be flush with the surface of the metal member 42, reducing the overall height of the gas-permeable membrane assembly 40, thereby reducing the installation height of the gas-permeable membrane assembly 40. In another embodiment, if the gas-permeable membrane assembly 40 includes no backing member 43, only the first annular step surface T1 may be provided to carry the gas-permeable membrane 41. As shown in (b) in FIG. 11, in still another embodiment, when the gas-permeable membrane assembly 40 includes a backing member 43, only the first annular step surface T1 may be provided to carry the backing member 43, and the gas-permeable membrane 41 may be directly attached to the surface of the metal member 42. In this way, because the thickness of the gas-permeable membrane 41 is small, the impact on the overall height of the gas-permeable membrane assembly 40 is relatively small. Reducing recessed surfaces on the metal member 42 can simplify the manufacturing process and enhance the strength of the metal member 42.

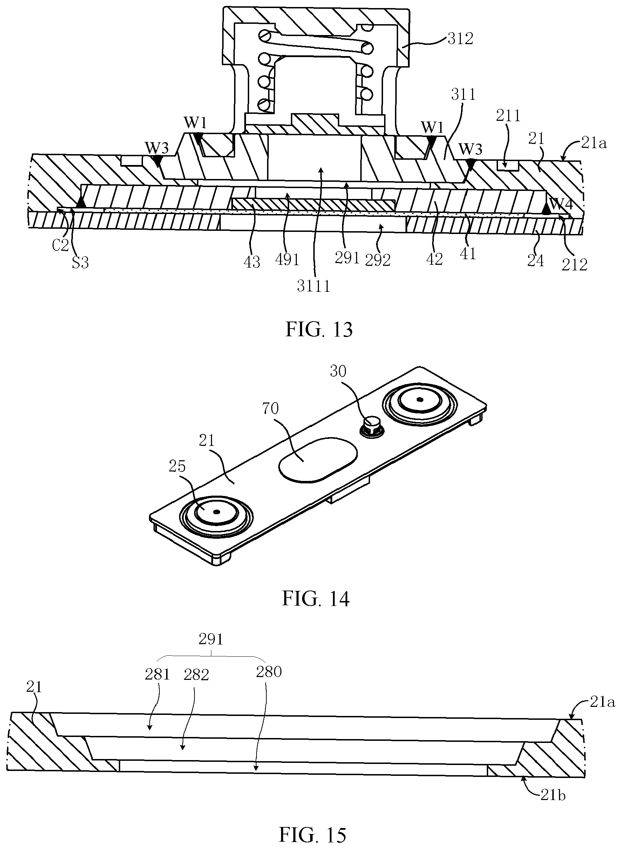

Referring to FIGs. 12, 13, and 14, FIG. 12 is a schematic partial cross-sectional structural diagram of an end cover according to one or more embodiments, FIG. 13 is a schematic cross-sectional structural diagram of a battery cell according to one or more embodiments, and FIG. 14 is a schematic front view of an end cover of a battery cell according to one or more embodiments.

According to some embodiments of this application, the one-way valve 30 is disposed on the end cover 21. The valve body 31 of the one-way valve 30 faces the outside of the housing, and the valve body 31 at least partially protrudes from the outer surface 21a of the end cover 21. The gas-permeable membrane assembly 40 is disposed on a side of the end cover 21 facing the inside of the housing. The one-way valve 30 and the gas-permeable membrane assembly 40 are each independently connected to the end cover 21.

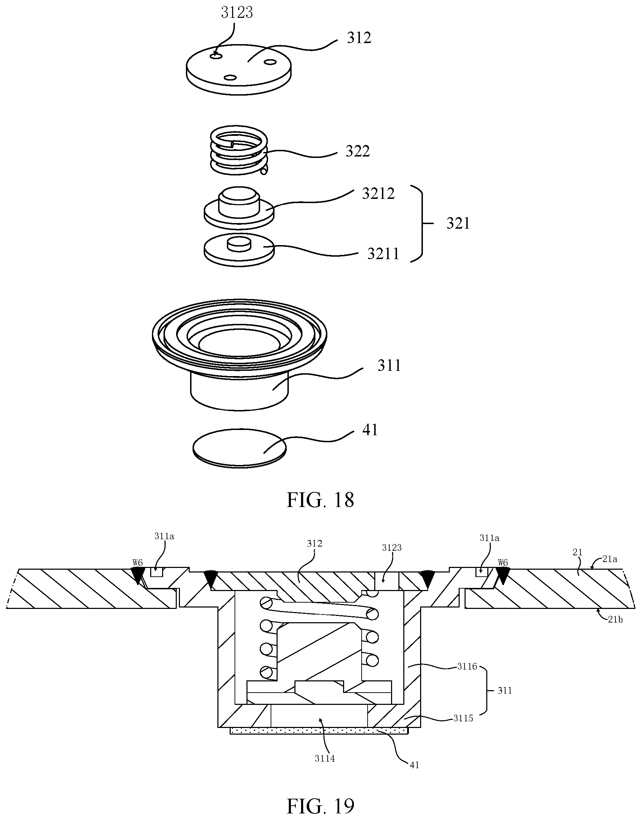

According to some embodiments of this application, the end cover 21 is provided with a first exhaust hole 291. The first exhaust hole 291 includes a through-hole section 280 and a first hole section 281. The through-hole section 280 and the first hole section 281 are arranged along the thickness direction of the end cover 21. The through-hole section 280 enables communication between the inside of the housing with the outside of the housing. The first hole section 281 is located on a side of the through-hole section 280 facing away from the inside of the housing. An aperture of the first hole section 281 is larger than an aperture of the through-hole section 280. The one-way valve 30 is at least partially accommodated in the first hole section 281. The valve body 31 of the one-way valve 30 faces the outside of the housing, and the valve body 31 at least partially protrudes from the outer surface 21a of the end cover 21. As shown in FIG. 19, the first exhaust hole 291 is a counterbore recessed relative to the outer surface 21a of the end cover 21. When the one-way valve 30 is connected to the end cover 21, a partial structure of the one-way valve 30 may be embedded in the first exhaust hole 291 to reduce the installation height.

According to some embodiments of this application, the one-way valve 30 is welded to the end cover 21. As shown in FIG. 13, the valve seat 311 of the one-way valve 30 may be configured to be welded to the end cover 21. Specifically, the valve cover 312 of the one-way valve 30 is connected to the valve seat 311. The valve seat 311 is welded to the end cover 21.

According to some embodiments of this application, the gas-permeable membrane assembly 40 includes a gas-permeable membrane 41 and a metal member 42. The gas-permeable membrane 41 is disposed on the metal member 42. The gas-permeable membrane assembly 40 is disposed on the end cover 21. The metal member 42 is connected to the end cover 21. That is, the gas-permeable membrane 41 is connected to the end cover 21 through the metal member 42. The metal member 42 may be connected to the end cover 21 by welding, interference fit, and the like. In this way, the connection strength between the gas-permeable membrane assembly 40 and the end cover 21 can be enhanced.

Still referring to FIGs. 13 and 14, according to some embodiments of this application, the end cover 21 has an outer surface 21a and an inner surface 21b disposed back to back. The outer surface 21a faces the outside of the housing. The inner surface 21b faces the inside of the housing. The end cover 21 has a first counterbore S1 recessed relative to the inner surface 21b. The first counterbore S1 is disposed around the first exhaust hole 291. The gas-permeable membrane assembly 40 is at least partially accommodated in the first counterbore S1.

The first counterbore S1 is formed by recessing in a direction from the inner surface 21b of the end cover 21 to the outer surface 21a of the end cover 21. The end cover 21 may be stamped to form the recessed first counterbore S1; or the end cover 21 may be etched to remove a partial structure to form the recessed first counterbore S1. A recess depth of the first counterbore S1 relative to the inner surface 21b of the end cover 21 can be set according to a thickness of the gas-permeable membrane assembly 40. The thickness of the gas-permeable membrane assembly 40 is the overall thickness including the gas-permeable membrane 41, the metal member 42, and the backing member 43. As mentioned above, the gas-permeable membrane 41 and the backing member 43 can be accommodated in an annular step recessed relative to the surface of the metal member 42 on the metal member 42, that is, the overall thickness of the gas-permeable membrane assembly 40 may be equal to a thickness of the metal member 42. Preferably, the recess depth of the first counterbore S1 relative to the inner surface 21b of the end cover 21 is equal to the thickness of the gas-permeable membrane assembly 40, so that the gas-permeable membrane assembly 40 is accommodated in the first counterbore S1, and a surface of the gas-permeable membrane assembly 40 facing the inside of the housing is flush with the inner surface 21b of the end cover 21. In this way, the installation height of the gas-permeable membrane assembly 40 can be reduced, thereby reducing the occupation of the internal space of the housing of the battery cell 20 and improving the space utilization rate inside the housing.

As shown in FIG. 14, the gas-permeable membrane 41 may be disposed on a side of the metal member 42 facing the inside of the housing, that is, the gas-permeable membrane 41 is below the metal member 42. Through this arrangement, the influence of the working external environment of the battery cell 20 on the gas-permeable membrane 41 can be reduced. In another embodiment, the gas-permeable membrane 41 may alternatively be disposed on a side of the metal member 42 facing the outside of the housing, that is, the gas-permeable membrane 41 is disposed between the metal member 42 and the end cover 21. Through this arrangement, the erosion of the gas-permeable membrane 41 by the electrolyte system can be reduced.

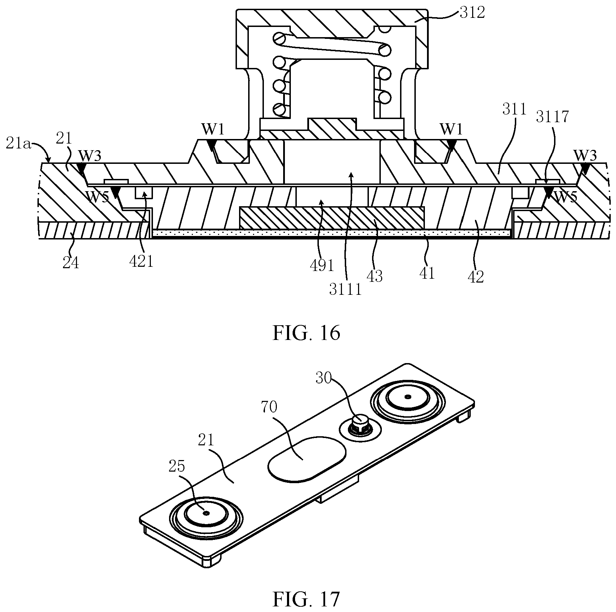

Referring to FIGs. 15, 16, and 17, FIG. 15 is a schematic partial cross-sectional structural diagram of an end cover according to one or more embodiments, FIG. 16 is a schematic cross-sectional structural diagram of a battery cell according to one or more embodiments, and FIG. 17 is a schematic front view of an end cover of a battery cell according to one or more embodiments.

According to some embodiments of this application, the one-way valve 30 is disposed on the end cover 21. The valve body 31 of the one-way valve 30 faces the outside of the housing, and the valve body 31 at least partially protrudes from the outer surface 21a of the end cover 21. The gas-permeable membrane assembly 40 is disposed on a side of the end cover 21 facing the outside of the housing. The one-way valve 30 and the gas-permeable membrane assembly 40 are each independently connected to the end cover 21.

As mentioned above, the end cover 21 is provided with the first exhaust hole 291. The first exhaust hole 291 includes the first hole section 281. The one-way valve 30 is at least partially accommodated in the first hole section 281, the valve body 31 of the one-way valve 30 faces the outside of the housing, and the valve body 31 at least partially protrudes from the outer surface 21a of the end cover 21. In these embodiments, the gas-permeable membrane assembly 40 is disposed on the side of the end cover 21 facing the outside of the housing, the gas-permeable membrane assembly 40 is at least partially accommodated in the first exhaust hole 291, and the gas-permeable membrane assembly 40 is located on a side of the one-way valve 30 facing the end cover 21.

Specifically, the first exhaust hole 291 further includes a second hole section 282. Along the thickness direction of the end cover 21, the second hole section 282 is located between the through-hole section 280 and the first hole section 281. An aperture of the second hole section 282 is smaller than the aperture of the first hole section 281. The aperture of the second hole section 282 is larger than the aperture of the through-hole section 280. The gas-permeable membrane assembly 40 is at least partially accommodated in the second hole section 282.

According to some embodiments of this application, the gas-permeable membrane assembly includes a gas-permeable membrane and a connecting member. The connecting member is provided with a first gas-permeable hole. The gas-permeable membrane is disposed on the connecting member and covers the first gas-permeable hole, and the gas-permeable membrane is configured to allow the gas inside the battery cell to pass through the gas-permeable membrane and be discharged. The connecting member may be a sheet-like member or a metal member.

In an embodiment, the gas-permeable membrane assembly 40 includes a gas-permeable membrane 41 and a metal member 42. The metal member 42 is provided with a first gas-permeable hole 491. The gas-permeable membrane 41 is disposed on the metal member 42 and covers the first gas-permeable hole 491. The metal member 42 is welded to the end cover 21.

According to some embodiments of this application, the one-way valve 30 may be disposed on the end cover 21. The valve body 31 of the one-way valve 30 faces the inside of the housing, and the valve body 31 at least partially protrudes from the inner surface 21b of the end cover 21. The gas-permeable membrane assembly 40 is connected to the one-way valve 30. The one-way valve 30 is connected to the end cover 21. That is, the one-way valve 30 and the gas-permeable membrane assembly 40 are first compounded and then connected to the end cover 21.

Referring to FIGs. 18 and 19, FIG. 18 is a schematic structural exploded view of an exhaust assembly according to one or more embodiments, and FIG. 19 is a schematic cross-sectional structural diagram of an exhaust assembly according to one or more embodiments. According to some embodiments of this application, the gas-permeable membrane 41 membrane assembly is disposed on a side of the seat bottom wall 3115 of the one-way valve 30 away from the valve cavity 313. The gas-permeable membrane assembly 40 includes a gas-permeable membrane 41. The gas-permeable membrane 41 is connected to the seat bottom wall 3115, and the gas-permeable membrane 41 covers the fourth through hole 3114. In these embodiments, the gas-permeable membrane assembly 40 is compounded with the one-way valve 30, and the gas-permeable membrane 41 is attached to the seat bottom wall 3115 of the one-way valve 30. This can reduce the installation height. In addition, only the one-way valve 30 needs to be connected to the end cover 21, which can simplify the assembly process.

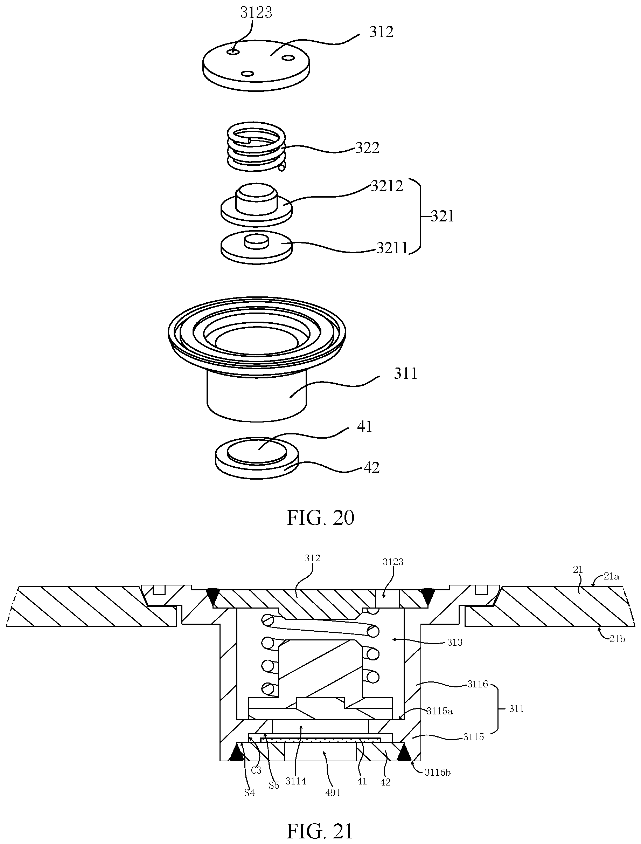

Referring to FIGs. 20 and 21, FIG. 20 is a schematic structural exploded view of an exhaust assembly according to one or more embodiments, and FIG. 21 is a schematic cross-sectional structural diagram of an exhaust assembly according to one or more embodiments. According to some embodiments of this application, the gas-permeable membrane assembly 40 is disposed on the side of the seat bottom wall 3115 of the one-way valve 30 away from the valve cavity 313, where the gas-permeable membrane assembly 40 includes a gas-permeable membrane 41 and a metal member 42. The metal member 42 is provided with a first gas-permeable hole 491. The gas-permeable membrane 41 is disposed on the metal member 42 and covers the first gas-permeable hole 491. The metal member 42 is connected to the seat bottom wall 3115. In these embodiments, the metal member 42 is configured to be connected to the seat bottom wall 3115, so that the connection strength can be enhanced.

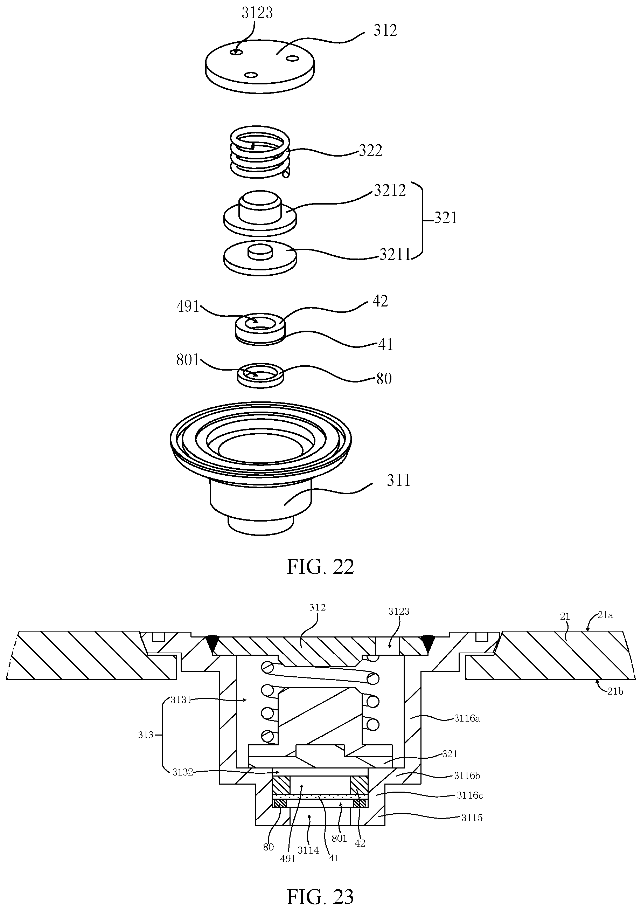

Referring to FIGs. 22 and 23, FIG. 22 is a schematic structural exploded view of an exhaust assembly according to one or more embodiments, and FIG. 23 is a schematic cross-sectional structural diagram of an exhaust assembly according to one or more embodiments. According to some embodiments of this application, the gas-permeable membrane assembly 40 is disposed on a side of the seat bottom wall 3115 facing the valve cavity 313.

The valve cavity 313 includes a first cavity 3131 and a second cavity 3132 in communication with each other. The second cavity 3132 is closer to the seat bottom wall 3115. Along a direction parallel to the seat bottom wall 3115, a cross-sectional area of the first cavity 3131 is larger than a cross-sectional area of the second cavity 3132. The valve core 32 is located in the first cavity 3131. The gas-permeable membrane assembly 40 is located in the second cavity 3132. Through this arrangement, after entering the valve cavity, the gas first passes through the gas-permeable membrane assembly and then reaches the valve core, thereby blocking the overflow of the electrolyte.

Further, the seat side wall 3116 includes a first side wall portion 3116a, a second side wall portion 3116b, and a third side wall portion 3116c. The first side wall portion 3116a and the second side wall portion 3116b enclose the first cavity 3131. The third side wall portion 3116c and the seat bottom wall 3115 enclose the first cavity 3131. The blocking member 321 of the valve core 32 abuts against the second side wall portion 3116b. In these embodiments, the second cavity 3132 is an open cavity to be in communication with the first cavity 3131. The blocking member 321 of the valve core 32 located in the first cavity 3131 abuts against the second side wall portion 3116b, and the blocking member 321 can be configured to block the second cavity 3132. When the internal air pressure of the battery cell is low, the gas cannot enter the first cavity 3131 from the second cavity 3132. When the internal air pressure of the battery cell is high, the gas enters the second cavity 3132, pushes open the blocking member 321 to enter the first cavity 3131, and then is discharged from the air outlet of the valve cavity 313.

Still referring to FIG. 23, according to some embodiments of this application, the gas-permeable membrane assembly 40 is located in the second cavity 3132, so that the gas passes through the gas-permeable membrane assembly 40 first when the gas is discharged from the first cavity 3131 through the second cavity 3132.

The gas-permeable membrane assembly 40 may include only a gas-permeable membrane 41. The gas-permeable membrane 41 is attached to the side of the seat bottom wall 3115 facing the valve cavity 313 and covers the fourth through hole 3114. In this case, the gas entering from the fourth through hole 3114 passes through the gas-permeable membrane 41, thereby blocking the electrolyte from entering the second cavity 3132.

In another embodiment, the gas-permeable membrane assembly 40 may alternatively include a gas-permeable membrane 41 and a metal member 42. The gas-permeable membrane 41 is disposed on the metal member 42. The metal member 42 is configured to be connected to a wall of the second cavity 3132 (the third side wall portion 3116c), thereby improving the stability of the connection and preventing the gas-permeable membrane 41 from being displaced by the gas.

The gas-permeable membrane 41 may be disposed on a side of the metal member 42 facing the seat bottom wall 3115, so that the metal member 42 has a supporting force on the gas-permeable membrane 41, thereby preventing the gas-permeable membrane 41 from being displaced by the gas. In another embodiment, the gas-permeable membrane 41 may alternatively be disposed on a side of the metal member 42 away from the seat bottom wall 3115.

Still referring to FIG. 23, according to some embodiments of this application, when the gas-permeable membrane 41 is disposed on the side of the metal member 42 facing the seat bottom wall 3115, a side surface of the metal member 42 away from the gas-permeable membrane 41 is lower than a surface of the second side wall portion 3116b. Through this arrangement, a certain cavity may be formed between the metal member 42 and the blocking member 321, facilitating the discharge of gas.

Still referring to FIG. 23, according to some embodiments of this application, the battery cell 20 further includes a sealing ring 80. The sealing ring 80 is disposed between the gas-permeable membrane assembly 40 and the seat bottom wall 3115. Through this arrangement, the sealing between the gas-permeable membrane assembly 40 and the seat bottom wall 3115 can be improved.

Further, the sealing ring 80 is disposed between the gas-permeable membrane 41 and the seat bottom wall 3115. The sealing ring 80 is disposed around the fourth through hole 3114. The sealing ring 80 is provided with a second gas-permeable hole 801. An aperture of the second gas-permeable hole 801 is larger than an aperture of the fourth through hole 3114. The gas-permeable membrane 41 covers the second gas-permeable hole 801. Through this arrangement, the sealing between the gas-permeable membrane 41 and the seat bottom wall 3115 can be improved, and the sealing ring 80 does not block the circulation of the gas.

According to some embodiments of this application, the metal member 42 is welded to the third side wall portion 3116c; or the metal member 42 is in interference fit with the third side wall portion 3116c.

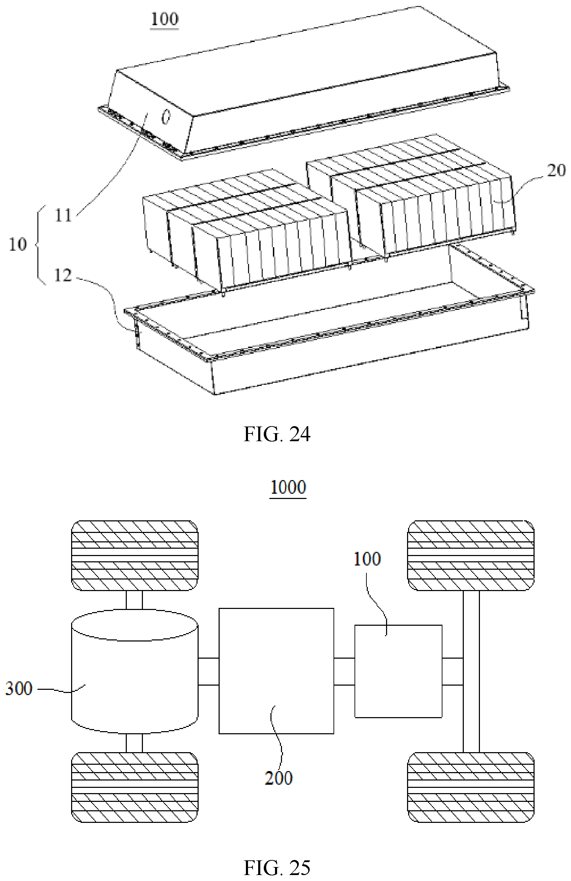

According to some embodiments of this application, this application further provides a battery 100. The battery 100 includes the battery cell 20 according to any one of the foregoing solutions. Referring to FIG. 24, FIG. 24 is a schematic structural exploded view of a battery according to one or more embodiments. The battery 100 includes a box 10 and a battery cell 20. The battery cell 20 is accommodated in a box 10. The box 10 is configured to provide an accommodating space for the battery cell 20, and the box 10 may adopt various structures. In some embodiments, the box 10 may include a first portion 11 and a second portion 12. The first portion 11 and the second portion 12 fit each other, so that the first portion 11 and the second portion 12 jointly define an accommodating space for accommodating the battery cell 20. The second portion 12 may be a hollow structure with an opening formed at one end, the first portion 11 may be a plate-like structure, and the first portion 11 covers an opening side of the second portion 12, so that the first portion 11 and the second portion 12 jointly define the accommodating space. The first portion 11 and the second portion 12 may alternatively each be a hollow structure with an opening on one side. The opening side of the first portion 11 is engaged with the opening side of the second portion 12. Certainly, the box 10 formed by the first portion 11 and the second portion 12 may have various shapes, such as a cylinder and a cuboid.

In the battery 100, a plurality of battery cells 20 may be provided, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety formed by the plurality of battery cells 20 is accommodated in the box 10. Certainly, a plurality of battery cells 20 are connected in series, parallel, or series-parallel first to form a battery module, and then a plurality of battery modules are connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery. Specific examples of the battery cell 20 include all types of primary batteries or secondary batteries. For example, specific examples of the battery cell 20 may be different types of secondary batteries such as lithium batteries, sodium batteries, and potassium batteries. Lithium secondary batteries may include lithium metal secondary batteries, lithium-ion secondary batteries, lithium polymer secondary batteries, or lithium-ion polymer secondary batteries. Specific examples of the battery cell 20 may alternatively be lithium-sulfur batteries, sodium-ion batteries, or magnesium-ion batteries, but are not limited thereto. The battery cell 20 may be in a cylindrical shape, a flat shape, a cuboid shape, or another shape.

In some embodiments, the battery may be an energy storage apparatus. The energy storage apparatus includes an energy storage container, an energy storage cabinet, and the like.

According to some embodiments of this application, this application further provides an electric device. The electric device includes the battery cell according to any one of the foregoing solutions, and the battery cell is configured to provide electrical energy for the electric device. The electric device may be any one of the foregoing devices or systems using the battery cell.

In some embodiments, the use of the electric device of this application is not particularly limited, and the electric device may be used in any electronic apparatus known in the prior art. The battery disclosed in the embodiments of this application may be used in electric devices that use batteries as power sources or in various energy storage systems that use batteries as energy storage elements. That is, an electric device is provided. In some embodiments, the electric device of this application may be used in, but is not limited to, notebook computers, pen-input computers, mobile computers, e-book players, portable phones, portable fax machines, portable copiers, portable printers, head-mounted stereo headphones, video recorders, LCD televisions, portable cleaners, portable CD players, mini discs, transceivers, electronic notebooks, calculators, memory cards, portable tape recorders, radios, backup power sources, motors, automobiles, motorcycles, power-assisted bicycles, bicycles, ships, spacecraft, lighting fixtures, toys, game consoles, clocks, power tools, flashlights, cameras, household large batteries, lithium-ion capacitors, and the like.

The battery cell, the battery module, or the battery pack may be selected for the electric device based on requirements for using the electric device.

Referring to FIG. 25, FIG. 25 is a schematic structural diagram of a vehicle according to one or more embodiments. The vehicle 1000 may be a fuel vehicle, a gas vehicle, or a new energy vehicle. The new energy vehicle may be a battery electric vehicle, a hybrid electric vehicle, or an extended-range electric vehicle, etc. A battery 100 is provided inside the vehicle 1000. The battery 100 may be disposed at the bottom, head, or tail of the vehicle 1000. The battery 100 may be configured to supply power to the vehicle 1000. For example, the battery 100 may be used as an operating power source for the vehicle 1000. The vehicle 1000 may further include a controller 200 and a motor 300. The controller 200 is configured to control the battery 100 to supply power to the motor 300, for example, to satisfy power needs of start, navigation, and driving of the vehicle 1000.

In some embodiments of this application, the battery 100 may not only be used as an operating power source for the vehicle 1000, but also as a driving power source for the vehicle 1000, replacing or partially replacing fuel or natural gas to provide driving power for the vehicle 1000.

In the above embodiments, the provision of the gas-permeable membrane assembly allows the gas inside the battery cell in a sealed state to be discharged through the gas-permeable membrane, so that the gas inside the battery cell is discharged to the outside of the housing in a timely manner, the air pressure inside the battery cell is not excessively high, and the pressure relief mechanism does not open the valve in advance, thereby greatly prolonging the battery life. One or more gas-permeable membrane assemblies may be disposed on one battery cell. The arrangement positions and methods of the gas-permeable membrane assemblies may be different. For example, one gas-permeable membrane assembly is disposed on a side of the end cover facing the inside of the battery cell, and another gas-permeable membrane assembly is disposed on a side of the end cover facing the outside of the battery cell. One gas-permeable membrane assembly may be disposed on the end cover, and another gas-permeable membrane assembly may be disposed on the housing body.

The foregoing descriptions are merely the embodiments of this application, and does not therefore limit the patent scope of this application. Any equivalent structures or equivalent process transformations made by using the content of the description and drawings of this application or directly or indirectly applied in other related technical fields, are similarly included in the patent protection scope of this application.

## Claims

1. A battery cell, comprising:
a housing having a wall portion and an accommodating cavity;
an exhaust assembly disposed on the wall portion, wherein the exhaust assembly is configured to discharge a gas inside the housing; and
an electrolyte filled in the accommodating cavity;
wherein a conductivity of the electrolyte satisfies: 2 ms/cm ≤ conductivity ≤ 16 ms/cm; and an exhaust rate of the exhaust assembly satisfies: 0.6 mL/day ≤ exhaust rate ≤ 10.0 mL/day.

2. The battery cell according to claim 1, wherein
the conductivity of the electrolyte satisfies: 8 ms/cm ≤ conductivity ≤ 16 ms/cm, and the exhaust rate of the exhaust assembly satisfies: 3.3 mL/day ≤ exhaust rate ≤ 10.0 mL/day; and
optionally, the conductivity of the electrolyte satisfies: 11 ms/cm ≤ conductivity ≤ 14 ms/cm, and the exhaust rate of the exhaust assembly satisfies: 4.5 mL/day ≤ exhaust rate ≤ 9.0 mL/day.

3. The battery cell according to claim 1, wherein
the conductivity of the electrolyte satisfies: 2 ms/cm ≤ conductivity ≤ 8 ms/cm, and the exhaust rate of the exhaust assembly satisfies: 0.6 mL/day ≤ exhaust rate ≤ 5.0 mL/day; and
optionally, the conductivity of the electrolyte satisfies: 4 ms/cm ≤ conductivity ≤ 6 ms/cm, and the exhaust rate of the exhaust assembly satisfies: 1.3 mL/day ≤ second exhaust rate ≤ 3.9 mL/day.

4. The battery cell according to any one of claims 1 to 3, wherein
the exhaust assembly comprises a gas-permeable membrane assembly, the gas-permeable membrane assembly comprises a gas-permeable membrane, and a gas permeation rate of the gas-permeable membrane is 3 mL/day to 10 mL/day.

5. The battery cell according to claim 4, wherein
the gas-permeable membrane comprises a first gas-permeable membrane, and a gas permeation rate of the first gas-permeable membrane is 3 mL/day to 4 mL/day; or
the gas-permeable membrane comprises a second gas-permeable membrane, and the gas permeation rate of the second gas-permeable membrane is 9 mL/day to 10 mL/day.

6. The battery cell according to any one of claims 1 to 3, wherein
the exhaust assembly comprises a one-way valve; and an opening pressure of the one-way valve is greater than or equal to 0.2 MPa, optionally greater than or equal to 0.4 MPa, and optionally greater than or equal to 0.8 MPa.

7. The battery cell according to any one of claims 1 to 3, wherein
the exhaust assembly comprises a gas-permeable membrane assembly and a one-way valve; the wall portion has a first exhaust hole; the first exhaust hole enables communication between the inside of the housing and the outside of the housing; and the battery cell is configured such that a gas discharged through the first exhaust hole flows through the one-way valve and the gas-permeable membrane assembly.

8. The battery cell according to claim 7, wherein
the opening pressure of the one-way valve is greater than or equal to 0.4 MPa; the gas-permeable membrane assembly comprises a second gas-permeable membrane; and a gas permeation rate of the second gas-permeable membrane is 9 mL/day to 10 mL/day.

9. The battery cell according to any one of claims 1 to 3, wherein
the exhaust assembly comprises a gas-permeable membrane assembly and a one-way valve; the wall portion has a first exhaust hole and a third exhaust hole spaced apart; the first exhaust hole and the third exhaust hole each enable communication between the inside of the housing and the outside of the housing; and the battery cell is configured such that a gas discharged through the first exhaust hole flows through the one-way valve, and a gas discharged through the third exhaust hole flows through the gas-permeable membrane assembly.

10. The battery cell according to claim 9, wherein
an opening pressure of the one-way valve is greater than or equal to 0.8 MPa; the gas-permeable membrane assembly comprises a first gas-permeable membrane; and a gas permeation rate of the first gas-permeable membrane is 3 mL/day to 4 mL/day.

11. The battery cell according to any one of claims 1 to 10, wherein
a gas production rate of the battery cell satisfies: 0.006 mL/Ah/D ≤ gas production rate ≤ 0.066 mL/Ah/D;
optionally, the gas production rate of the battery cell satisfies: 0.006 mL/Ah/D ≤ gas production rate ≤ 0.033 mL/Ah/D;
optionally, the gas production rate of the battery cell satisfies: 0.013 mL/Ah/D ≤ gas production rate ≤ 0.026 mL/Ah/D;
optionally, the gas production rate of the battery cell satisfies: 0.033 mL/Ah/D ≤ gas production rate ≤ 0.066 mL/Ah/D; and
optionally, the gas production rate of the battery cell satisfies: 0.045 mL/Ah/D ≤ gas production rate ≤ 0.060 mL/Ah/D.

12. The battery cell according to any one of claims 1 to 11, wherein
the electrolyte comprises one or more of chain ethers, ethylene glycol dimethyl ether and derivatives thereof, diethylene glycol dimethyl ether, triethylene glycol dimethyl ether, tetraethylene glycol dimethyl ether, and cyclic ethers.

13. The battery cell according to any one of claims 1 to 12, wherein
the battery cell further comprises an electrode assembly, the electrode assembly is accommodated in the accommodating cavity, and the electrode assembly comprises a positive electrode plate and a negative electrode plate, wherein
the positive electrode plate comprises a positive electrode current collector and a positive electrode active layer disposed on the positive electrode current collector, the positive electrode active layer comprises a positive electrode active material, and the positive electrode active material comprises one or more of a polyanionic positive electrode material, a phosphate positive electrode material, a sulfate positive electrode material, a silicate positive electrode material, and a borate positive electrode material; and/or
the negative electrode plate comprises a negative electrode current collector and a carbon-containing coating provided on the negative electrode current collector, the carbon-containing coating comprises a carbon-containing material, and the carbon-containing material comprises one or more of conductive carbon, graphite, hard carbon, and carbon nanotubes.

14. The battery cell according to any one of claims 6 to 10, wherein
the one-way valve comprises a valve body and a valve core; the valve body has a valve cavity inside, and the valve body is provided with an air inlet and an air outlet; the air inlet is configured to enable communication between the valve cavity and the inside of the housing; the air outlet is configured to enable communication between the valve cavity and the outside of the housing; and the valve core is disposed in the valve cavity, the valve core is configured to block an air inlet channel of the valve cavity, and the valve core is configured to open the air inlet channel under the action of the gas inside the housing.

15. The battery cell according to any one of claims 4, 5, and 7 to 10, wherein
the gas-permeable membrane assembly comprises a gas-permeable membrane and a connecting member; the connecting member is provided with a first gas-permeable hole; and the gas-permeable membrane is disposed on the connecting member and covers the first gas-permeable hole, and the gas-permeable membrane is configured to allow a gas inside the battery cell to pass through the gas-permeable membrane and be discharged.

16. The battery cell according to claim 7 or 8, wherein
the wall portion has an outer surface and an inner surface disposed back to back; the outer surface faces the outside of the housing; the inner surface faces the inside of the housing; the wall portion is provided with a first exhaust hole; the first exhaust hole comprises a through-hole section and a first hole section; the through-hole section and the first hole section are arranged along a thickness direction of the wall portion; the through-hole section enables communication between the inside of the housing and the outside of the housing; the first hole section is located on a side of the through-hole section facing away from the inside of the housing; an aperture of the first hole section is larger than an aperture of the through-hole section; and the one-way valve is at least partially accommodated in the first hole section.

17. The battery cell according to claim 16, wherein
the valve body of the one-way valve at least partially protrudes from the outer surface; the wall portion has a first counterbore recessed relative to the inner surface; the first counterbore is disposed around the first exhaust hole; and the gas-permeable membrane assembly is at least partially accommodated in the first counterbore.

18. The battery cell according to claim 16, wherein
the valve body of the one-way valve at least partially protrudes from the outer surface of the wall portion; the first exhaust hole further comprises a second hole section; along the thickness direction of the wall portion, the second hole section is located between the through-hole section and the first hole section; an aperture of the second hole section is smaller than the aperture of the first hole section, and the aperture of the second hole section is larger than the aperture of the through-hole section; and the gas-permeable membrane assembly is at least partially accommodated in the second hole section, and the gas-permeable membrane assembly is located on a side of the one-way valve facing the wall portion.

19. The battery cell according to claim 16, wherein
the one-way valve comprises a valve body; the valve body at least partially protrudes from the inner surface of the wall portion, and the valve body comprises a valve seat and a valve cover; the valve seat comprises a seat bottom wall and a seat side wall connected to the seat bottom wall; the valve cover is disposed at an end of the valve seat away from the seat bottom wall; the valve cover, the seat side wall, and the seat bottom wall enclose the valve cavity; and the valve seat is provided with an air inlet of the valve cavity; wherein
the gas-permeable membrane assembly is disposed on a side of the seat bottom wall away from the valve cavity; or
the gas-permeable membrane assembly is disposed on a side of the seat bottom wall facing the valve cavity.

20. A battery, comprising the battery cell according to any one of claims 1 to 19.

21. An electric device, comprising the battery cell according to any one of claims 1 to 19, wherein the battery cell is configured to provide electrical energy.
